(19) Europäisches Patentamt
European Patent Office
Office européen des brevets

(11) **EP 3 287 343 B1**

(12) **EUROPEAN PATENT SPECIFICATION**

(45) Date of publication and mention
of the grant of the patent:
**25.09.2019   Bulletin 2019/39**

(51) Int Cl.:
**B62D 5/04** (2006.01)

(21) Application number: **17186504.1**

(22) Date of filing: **16.08.2017**

(54) **STEERING CONTROL DEVICE**

LENKSTEUERUNGSVORRICHTUNG

DISPOSITIF DE COMMANDE DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2016   JP 2016165884**

(43) Date of publication of application:
**28.02.2018   Bulletin 2018/09**

(73) Proprietors:
• **JTEKT CORPORATION
Osaka-shi,
Osaka 542-8502 (JP)**
• **TOYOTA JIDOSHA KABUSHIKI KAISHA
Toyota-shi, Aichi-ken,  471-8571 (JP)**

(72) Inventors:
• **TOKO, Takahiro
Osaka-shi, Osaka, 542-8502 (JP)**
• **TAMAKI, Hiromasa
Osaka-shi, Osaka, 542-8502 (JP)**
• **HASEGAWA, Jun
Osaka-shi, Osaka, 542-8502 (JP)**
• **FUJITA, Shohei
Toyota-shi, Aichi-ken, 471-8571 (JP)**
• **YANAI, Kohei
Toyota-shi, Aichi-ken, 471-8571 (JP)**
• **SUZUKI, Tatsuya
Toyota-shi, Aichi-ken, 471-8571 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
**WO-A2-2007/093875**

**Description**

BACKGROUND OF THE INVENTION

1. Field of the Invention

The invention relates to a steering control device configured to control a steering system, the steering system including a turning actuator that turns steered wheels of a vehicle, and the steering system assisting turning of the steered wheels in accordance with steering of a steering wheel.

2. Description of Related Art

For example, in Japanese Patent Application Publication No. 2009-143312 (JP 2009-143312 A), a steering control device is described. The steering control device executes control that reduces an impact that is generated at a time when a steering angle of a steering wheel reaches a specified amount, which leads to so-called end abutment, and thus, a turning angle of steered wheels reaches a limit angle. The control device determines that the end abutment has occurred when an absolute value of steering torque is equal to or larger than a threshold and an absolute value of a changing rate of the steering torque is equal to or larger than a threshold. When the control device determines that the end abutment has occurred, the control device obtains a current immediately before occurrence of the end abutment as a present assist current by using a phase delay of a low pass filter (paragraph [0022]). Then, the control device controls a motor such that a value of a current flowing through the motor coincides with a value obtained by sequentially subtracting a current value of a surplus current waveform, which is stored in advance, from the present assist current. This suppresses an increase in the current flowing through the motor, which occurs when a rotational speed of the motor is abruptly decreased due to the end abutment and an induced voltage is thereby decreased. In addition, the value of the current flowing through the motor is controlled to a value that is appropriate for maintaining the above turning angle at the limit angle (paragraph [0041]). WO 2007/093875 A2 shows a steering device having the features of the preamble of claim 1.

SUMMARY OF THE INVENTION

It is considered that the value of the current immediately before the end abutment is close to an appropriate current value at a time at which the end abutment occurs. The above control device obtains the current immediately before the end abutment by using the phase delay of the low pass filter. However, when a time constant of the low pass filter does not correspond to the rotational speed of the motor immediately before the end abutment, it is not possible to obtain an accurate value of the current immediately before the end abutment. Thus, it is difficult to control the current at the time at which the end abutment occurs, to the current immediately before the end abutment.

The invention provides a steering control device that suppresses occurrence of a situation where end abutment causes a value of a current flowing through a motor to excessively deviate from a value of the current immediately before the end abutment.

An aspect of the invention relates to a steering control device configured to control a steering system including a turning actuator that turns steered wheels of a vehicle. The steering system assists turning of the steered wheels in accordance with steering of a steering wheel. The turning actuator includes a motor. The steering control device includes a feedback processing portion configured to control through feedback a current flowing through the motor to a current command value; an end determination processing portion configured to determine whether a turning angle of steered wheels has reached a limit angle determined by a structure of the steering system; and an end-time limit processing portion configured to limit a magnitude of the current command value for the motor to a magnitude of a limited current value or smaller, when the end determination processing portion determines that the turning angle has reached the limit angle. The limited current value is a value obtained by performing correction to decrease a magnitude of a detected value of the current flowing through the motor at a time when the end determination processing portion determines that the turning angle has reached the limit angle, based on a degree of a decrease in a magnitude of a rotational speed of the motor. In other words, the end-time limit processing portion limits the magnitude of the current command value for the motor to the magnitude of the limited current value or smaller, when the end determination processing portion determines that the turning angle has reached the limit angle, the limited current value being set based on the decrease amount by which the magnitude of the rotational speed of the motor is decreased.

Since a magnitude of an induced voltage of the motor is decreased when the turning angle has reached the limit angle, the magnitude of the detected value of the current flowing through the motor tends to be larger than an appropriate current immediately before the turning angle reaches the limit angle, at a time point at which the determination that the turning angle has reached the limit angle is made. A degree by which the magnitude of the detected value of the current exceeds the appropriate current depends on a decrease amount of the magnitude of the rotational speed of the motor (i.e., a decrease amount by which the magnitude of the rotational speed of the motor is decreased). Accordingly, the value, which is obtained by performing correction to decrease the magnitude of the current at the time point at which the determination that the turning angle has reached the limit angle is made, based on the decrease amount of the magnitude of the rotational speed of the motor, is close to the current flowing through the motor immediately before the turning angle reaches the limit angle. Thus, in the above configuration, this corrected current is set as the limited current value, and the current command value is limited to the limited current value or smaller. In this way, it is possible to suppress occurrence of a situation where the end abutment causes the value of the current flowing through the motor to excessively deviate from the value of the current flowing through the motor immediately before the end abutment.

In the steering control device according to the above aspect, the steering control device may further include a command value setting processing portion configured to set the current command value based on a detected value of steering torque; the command value setting processing portion may be configured to set the magnitude of the current command value such that the magnitude of the current command value at a time when a magnitude of the detected value of the steering torque is large is larger than the magnitude of the current command value at a time when the magnitude of the detected value of the steering torque is small; the steering control device may further include an estimation processing portion configured to estimate the current flowing through the motor immediately before the turning angle reaches the limit angle such that the estimated current is one of the current command value set by the command value setting processing portion and the limited current value, when the end determination processing portion determines that the turning angle has reached the limit angle, the magnitude of the one of the current command value and the limited current value being smaller than that of the other; and the end-time limit processing portion may be configured to set the current command value to a value that is equal to or smaller than a magnitude of the current estimated by the estimation processing portion.

On a so-called low µ road that is a road surface with small friction on which the vehicle is traveling, the magnitude of the required steering torque is small. Accordingly, the magnitude of the steering torque is less likely to be significantly increased. However, when the turning angle reaches the limit angle, due to inertia of the steering system that corresponds to a changing rate of a steering angle so far, the magnitude of the steering torque tends to be abruptly increased as compared to the magnitude of the steering torque before the turning angle reaches the limit angle. Accordingly, when the turning angle reaches the limit angle, the magnitude of the current command value tends to become larger than the magnitude of the detected value of the current, and the detected value of the current tends to be closer to the current flowing through the motor immediately before the turning angle reaches the limit angle than the current command value.

On a so-called high µ road that is a road surface with large friction on which the vehicle is traveling, the magnitude of the required steering torque is large. Accordingly, the magnitudes of the steering torque and assist torque tend to be increased before the turning angle reaches the limit angle, and an increase amount by which a magnitude of a command value of the assist torque is increased at the time when the turning angle reaches the limit angle tends to be smaller than that on the low µ road. Thus, in view of a fact that the magnitude of the detected value of the current is abruptly increased due to an abrupt decrease in a magnitude of the induced voltage when the turning angle reaches the limit angle, the magnitude of the current command value tends to be smaller than the magnitude of the detected value of the current, and the current command value tends to be closer to the current flowing through the motor immediately before the turning angle reaches the limit angle than the detected value of the current.

Accordingly, in the above configuration, the current flowing through the motor immediately before the turning angle reaches the limit angle is estimated such that the estimated current is one of the current command value and the limited current value obtained by performing correction to decrease the detected value, the magnitude of the one of the current command value and the limited current value being smaller than that of the other. Thus, regardless of whether the road is the high µ road or the low µ road, the current immediately before the turning angle reaches the limit angle can be accurately estimated.

In the steering control device according to the above aspect, the command value setting processing portion may include an upper limit guard processing portion configured to execute upper limit guard processing on the magnitude of the current command value; the upper limit guard processing portion may be configured to set an upper limit guard value of the current command value such that the upper limit guard value at a time when the magnitude of the rotational speed of the motor is large is smaller than the upper limit guard value at a time when the magnitude of the rotational speed of the motor is small; and the estimation processing portion may be configured to estimate the current flowing through the motor immediately before the turning angle reaches the limit angle such that the estimated current is one of the current command value that is subjected to the upper limit guard processing and the limited current value, the magnitude of the one of the current command value and the limited current value being smaller than that of the other.

On the high µ road, the magnitude of the steering torque tends to become larger than that on the low µ road. As a result, even before the turning angle reaches the limit angle, the current command value tends to be limited to the upper limit guard value by the upper limit guard processing. Accordingly, even in the case where the magnitude of the steering torque is increased due to an impact that occurs at the time when the turning angle reaches the limit angle, an increase in the magnitude of the steering torque is less likely to directly lead to an increase in the current command value. Thus, on the high μ road, the current command value at the time when the turning angle reaches the limit angle tends to be close to the current command value immediately before the turning angle reaches the limit angle. In view of a fact that the current flowing through the motor is controlled to the current command value by the feedback processing portion, the current flowing through the motor immediately before the turning angle reaches the limit angle tends to be close to the current command value at the time when the turning angle reaches the limit value. Thus, the utility value of the processing of selecting one of the current command value and the limited current value obtained by performing correction to decrease the detected value is especially high, the magnitude of the one of the current command value and the limited current value being smaller than that of the other.

In the steering control device according to the above aspect, the end determination processing portion may include a tentative determination processing portion configured to make a tentative determination that the turning angle has reached the limit angle, and a main determination processing portion configured to make a main determination that the turning angle has reached the limit angle; a condition based on which the main determination processing portion determines that the turning angle has reached the limit angle may be a stricter than a condition based on which the tentative determination processing portion determines that the turning angle has reached the limit angle; the estimation processing portion may be configured to estimate the current flowing through the motor immediately before the turning angle reaches the limit angle such that the estimated current is one of the limited current value and the current command value at a time when the tentative determination processing portion determines that the turning angle has reached the limit angle, the magnitude of the one of the limited current value and the current command value being smaller than that of the other, and the limited current value being a value that is obtained by performing correction to decrease the magnitude of the detected value of the current flowing through the motor at the time when the tentative determination processing portion determines that the turning angle has reached the limit angle, based on the degree of the decrease in the magnitude of the rotational speed of the motor; and the end-time limit processing portion may be configured to limit the magnitude of the current command value for the motor to the magnitude of the current estimated by the estimation processing portion or smaller, when the main determination processing portion determines that the turning angle has reached the limit angle.

In the above configuration, the condition based on which the main determination processing portion determines that the turning angle has reached the limit angle is stricter than the condition based on which the tentative determination processing portion determines that the turning angle has reached the limit angle. Accordingly, a time point at which the main determination processing portion determines that the turning angle has reached the limit angle is after a time point at which the tentative determination processing portion determines that the turning angle has reached the limit angle Thus, in the case where the estimation processing portion estimates the current immediately before the turning angle reaches the limit angle on the basis of the detected value and so on at the time when the main determination processing portion determines that the turning angle has reached the limit angle, estimation accuracy is lower than that in the case where the estimation processing portion estimates the current immediately before the turning angle reaches the limit angle on the basis of the detected value and so on at the time when the tentative determination processing portion determines that the turning angle has reached the limit angle. Accuracy of the determination made by the main determination processing portion is higher than accuracy of the determination made by the tentative determination processing portion.

Accordingly, in the above configuration, the current immediately before the turning angle reaches the limit angle is estimated on the basis of the detected value and so on at the time when the tentative determination processing portion determines that the turning angle has reached the limit angle. Thus, the current immediately before the turning angle reaches the limit angle can be accurately estimated. In addition, the end-time limit processing portion executes the processing of limiting the magnitude of the current command value to the magnitude of the current estimated by the estimation processing portion or smaller, when the main determination processing portion determines that the turning angle has reached the limit angle. Thus, it is possible to suppress occurrence of a situation where the magnitude of the current command value is limited to the magnitude of the current estimated by the estimation processing portion or smaller when the turning angle has not reached the limit angle.

In the steering control device according to the above aspect, the feedback processing portion may be configured to control a voltage that is applied to the motor based on an output value of an integral element obtained by using, as an input, a difference between the current flowing through the motor and the current command value; and the end-time limit processing portion may be configured to set the current command value to a value obtained by performing correction to decrease the magnitude of the current estimated by the estimation processing portion, based on the degree of the decrease in the magnitude of the rotational speed of the motor.

In the above configuration, before the turning angle reaches the limit angle, the output value of the integral element tends to be an appropriate value for the magnitude of the induced voltage before the turning angle reaches the limit angle such that the current flowing through the motor is controlled to the current command value. In addition, based on a fact that the magnitude of the detected value of the current exceeds the magnitude of the current command value, the feedback processing portion executes control to decrease the magnitude of the voltage that is applied to the motor. Thus, the control of decreasing the magnitude of the voltage tends to be delayed with respect to the decrease in the magnitude of the induced voltage. In this regard, in the above configuration, the current command value is set to the value obtained by performing correction to decrease the magnitude of the estimated current. Thus, the magnitude of the detected value significantly exceeds the magnitude of the current command value, and accordingly, the magnitude of the voltage applied to the motor is sharply decreased. Accordingly, it is possible to suppress occurrence of a situation where the magnitude of the detected value is significantly increased as compared to the magnitude of the estimated current before being corrected to be decreased. Further, a decrease correction amount, by which the magnitude of the estimated current is corrected to be decreased, is set in accordance with the degree of the decrease in the magnitude of the rotational speed. Thus, the decrease correction amount can be set in accordance with the degree of the decrease in the magnitude of the induced voltage.

In the steering control device according to the above aspect, the feedback processing portion may be configured to control a voltage that is applied to the motor based on an output value of an integral element obtained by using, as an input, a difference between the current flowing through the motor and the current command value; and when the end-time limit processing portion executes processing of limiting the magnitude of the current command value for the motor to the magnitude of the limited current value or smaller, the feedback processing portion may make a gain of the integral element larger than that when the end-time limit processing portion does not execute the processing.

In the above configuration, before the turning angle reaches the limit angle, the output value of the integral element tends to be an appropriate value for the magnitude of the induced voltage before the turning angle reaches the limit angle such that the current flowing through the motor is controlled to the current command value. In addition, based on the fact that the magnitude of the detected value of the current exceeds the magnitude of the current command value, the feedback processing portion executes control to decrease the magnitude of the voltage that is applied to the motor. Thus, the control of decreasing the magnitude of the voltage tends to be delayed with respect to the decrease in the magnitude of the induced voltage. In this regard, in the above configuration, the gain of the integral element is increased when the processing of limiting the magnitude of the current command value for the motor to the magnitude of the limited current value or smaller is executed, that is, when the magnitude of the induced voltage is abruptly decreased. Thus, it is possible to suppress occurrence of a situation where the control of decreasing the magnitude of the voltage is delayed with respect to the decrease in the magnitude of the induced voltage.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a view of a steering control device and a steering system according to a first embodiment;
FIG. 2 is a block diagram showing a part of processing according to the embodiment;
FIG. 3 is a flowchart of a procedure of current estimation processing during end abutment according to the embodiment;
FIG. 4 is a time chart showing behavior of a current on each of a low $\mu$ road and a high $\mu$ road;
FIG. 5 is a flowchart of a procedure of end abutment main determination processing according to the embodiment;
FIG. 6 is a flowchart of a procedure of processing for setting a current command value according to the embodiment;
FIG. 7 is a flowchart of a procedure of processing for resetting an end abutment determination flag according to the embodiment;
FIG. 8 is a flowchart of a procedure of processing for setting an end-time current command value according to a second embodiment; and
FIG. 9 is a flowchart of a procedure of processing for setting a feedback gain according to a third embodiment.

DETAILED DESCRIPTION OF EMBODIMENTS

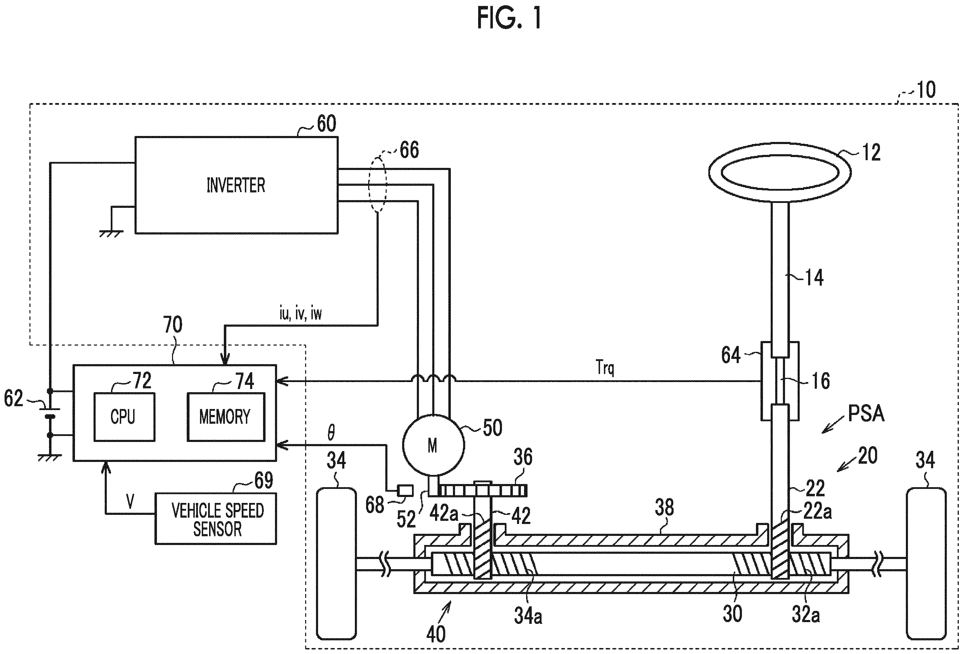

A steering control device according to a first embodiment of the invention will be described with reference to the drawings. As shown in FIG. 1, in a steering system 10 according to the embodiment, a steering wheel 12 can be coupled to a pinion shaft 22 of a turning actuator PSA via a steering shaft 14. The turning actuator PSA includes a first rack and pinion mechanism 20, a second rack and pinion mechanism 40, a surface permanent magnet synchronous motor (SPM) (hereinafter, may be referred to as "motor 50"), and an inverter 60.

The first rack and pinion mechanism 20 includes a rack shaft 30 and the pinion shaft 22 that are arranged at a specified crossing angle, and first rack teeth 32a formed on the rack shaft 30 mesh with pinion teeth 22a formed on the pinion shaft 22. Note that steered wheels 34 are respectively coupled to both ends of the rack shaft 30 via tie rods.

The second rack and pinion mechanism 40 includes the rack shaft 30 and a pinion shaft 42 that are arranged at a specified crossing angle, and second rack teeth 34a formed on the rack shaft 30 mesh with pinion teeth 42a formed on the pinion shaft 42.

The pinion shaft 42 is connected to a rotational shaft 52 of the motor 50 via a speed reducer 36. The inverter 60 is connected to the motor 50. The inverter 60 is a power conversion circuit that converts a DC voltage of a battery 62 to an AC voltage by selectively applying a positive electrode voltage and a negative electrode voltage of the battery 62 to terminals of the motor 50. Note that the rack shaft 30 is accommodated in a rack housing 38.

A control device 70 controls the steering system 10, that is, the steering system 10 is a control target. When controlling the control target, the control device 70 receives a detection value of a torque sensor 64 and a detection value of a current sensor 66. The torque sensor 64 detects steering torque Trq input to the steering wheel 12 on the basis of a torsion amount of a torsion bar 16 provided between the steering shaft 14 and the pinion shaft 22, and the current sensor 66 detects currents iu, iv, iw for the motor 50. In addition, the control device 70 receives output values of a rotational angle sensor 68 and a vehicle speed sensor 69. The rotational angle sensor 68 detects a rotational angle $\theta$ of the rotational shaft 52 of the motor 50, and the vehicle speed sensor 69 detects a traveling speed (a vehicle speed V) of a vehicle. The control device 70 includes a central processing unit (CPU 72) and a memory 74, and controls the control target when the CPU 72 executes a program stored in the memory 74.

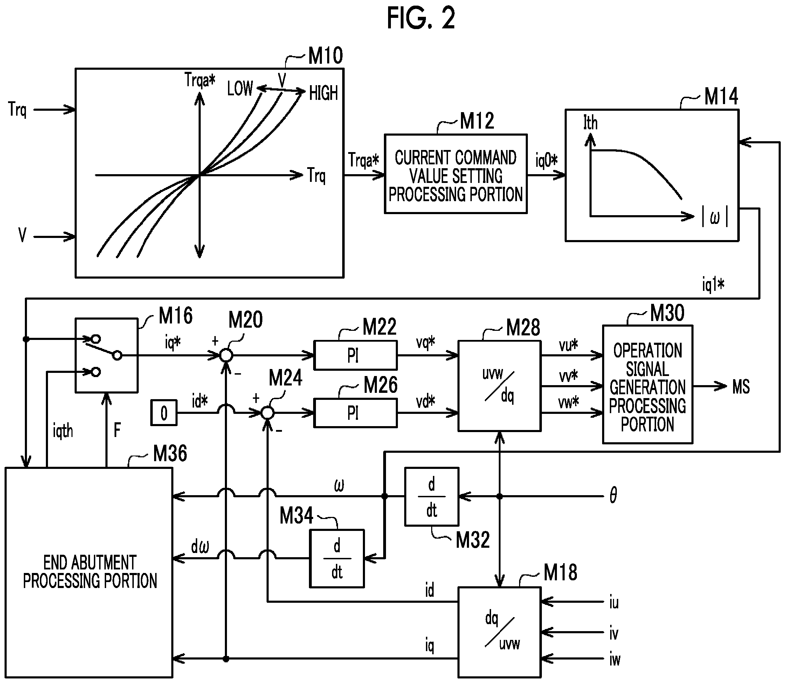

FIG. 2 shows a part of processing that is realized when the CPU 72 executes the program stored in the memory 74. An assist torque setting processing portion M10 sets a command value of assist torque (an assist command value Trqa*) on the basis of the steering torque Trq and the vehicle speed V. The assist torque setting processing portion M10 sets a magnitude (an absolute value) of the assist command value Trqa* to a larger value as a magnitude (an absolute value) of the steering torque Trq is increased. In the case where the steering torque Trq is the same, when the vehicle speed V is low, the assist torque setting processing portion M10 sets the absolute value of the assist command value Trqa* to a larger value than that when the vehicle speed V is high. Note that, in the following description, a sign of the steering torque Trq is a positive sign when the steering torque Trq has a value on a right turn side, and a negative sign when the steering torque Trq has a value on a left turn side.

A current command value setting processing portion M12 sets a current command value iq0* of a q-axis on the basis of the assist command value Trqa*. In detail, the current command value setting processing portion M12 sets a magnitude (an absolute value) of the current command value iq0* to a larger value as the magnitude of the assist command value Trqa* is increased. Note that, as well as the sign of the steering torque Trq, a sign of the current command value iq0* is a positive sign when the current command value iq0* has a value on the right turn side.

An upper limit guard processing portion M14 performs upper limit guard processing such that the absolute value of the current command value iq0* of the q-axis becomes equal to or lower than an upper limit guard value Ith. Here, in the case where a magnitude (an absolute value) of a rotational speed $\omega$ of the motor 50 is large, the upper limit guard value Ith is set to a smaller value than that when the magnitude of the rotational speed $\omega$ is small.

A current command value iq1*, which is the current command value iq0* after being subjected to the guard processing by the upper limit guard processing portion M14, is input, as a current command value iq* of the q-axis, to a deviation computation processing portion M20 when the current command value iq1* is selected by a switching processing portion M16.

The currents iu, iv, iw are converted to a current id of a d-axis and a current iq of the q-axis by a dq conversion processing portion M18. Then, the deviation computation processing portion M20 outputs a value that is obtained by subtracting the current iq from the current command value iq*. Thereafter, on the basis of the output value from the deviation computation processing portion M20, a q-axis feedback processing portion M22 sets a voltage command value vq* of the q-axis as a manipulative variable for controlling the current iq of the q-axis to the current command value iq* through feedback. More specifically, the q-axis feedback processing portion M22 sets the manipulative variable to a sum of an output value of a proportional element and an output value of an integral element, the output value of the proportional element and the output value of the integral element being obtained by using the output value from the deviation computation processing portion M20 as an input.

A deviation computation processing portion M24 outputs a value that is obtained by subtracting the current id from a current command value (here, "0" is used as an example) of the d-axis. A d-axis feedback processing portion M26 receives the output value from the deviation computation processing portion M24 and sets a voltage command value vd* of the d-axis that is a manipulative variable for controlling the current id of the d-axis to the command value through feedback. More specifically, the d-axis feedback processing portion M26 sets the manipulative variable to a sum of an output value of a proportional element and an output value of an integral element, the output value of the proportional element and the output value of the integral element being obtained by using the output value from the deviation computation processing portion M24 as an input.

Based on the rotational angle $\theta$, a three-phase conversion processing portion M28 converts the voltage command values vd*, vq* of the d, q-axes to voltage command values vu*, vv*, vw* in a three-phase fixed coordinate system. An operation signal generation processing portion M30 generates and outputs an operation signal MS for the inverter 60 such that an output line voltage of the inverter 60 coincides with an interphase voltage determined by the voltage command values vu*, vv*, vw*.

Note that, in this embodiment, an updating interval of the upper limit guard value Ith used by the upper limit guard processing portion M14 is longer than a control period of the q-axis feedback processing portion M22, a control period of the d-axis feedback processing portion M26, a sampling interval of the current iq of the q-axis, and a sampling interval of the current id of the d-axis.

A rotational speed computation processing portion M32 computes the rotational speed ω of the rotational shaft 52 of the motor 50 on the basis of the rotational angle θ. An acceleration computation processing portion M34 computes a changing rate (angular acceleration dω) of the rotational speed ω on the basis of the rotational speed ω.

An end abutment processing portion M36 generates an end-time current command value iqth input to the switching processing portion M16 and provides information for switching, to the switching processing portion M16. In this embodiment, the end-time current command value iqth is an estimated value of the current iq of the q-axis immediately before the rack shaft 30 comes into contact with the rack housing 38 such that axial displacement of the rack shaft 30 is prevented, that is, immediately before end abutment occurs.

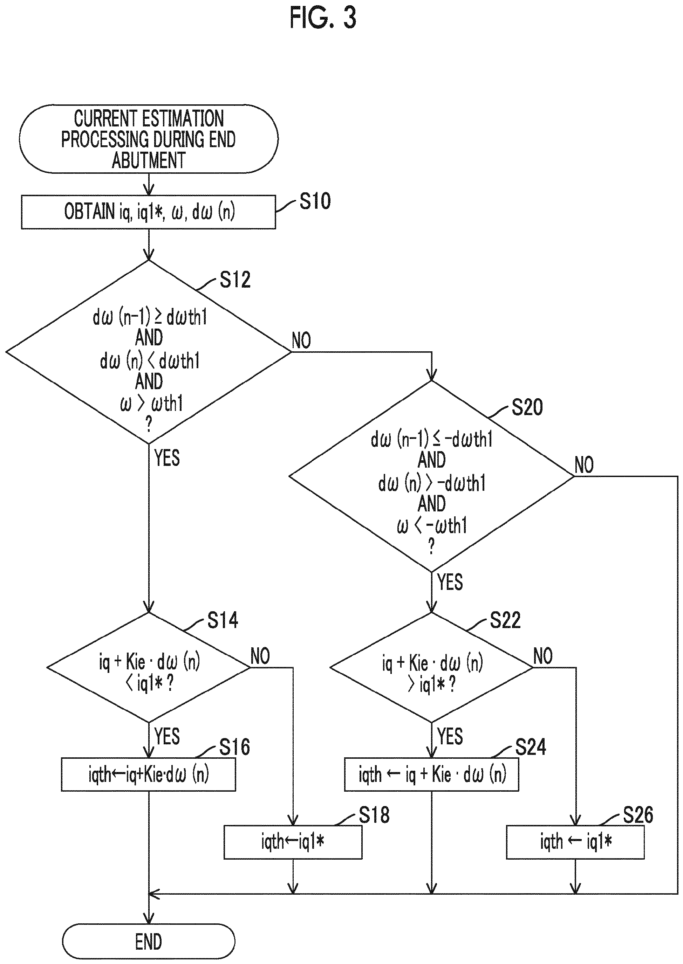

FIG. 3 shows a procedure of current estimation processing during the end abutment as one kind of processing executed by the end abutment processing portion M36. This processing is repeatedly executed at specified intervals, for example. In the following description, the CPU 72 executes the processing.

In a series of the processing shown in FIG. 3, the CPU 72 first obtains the current iq of the q-axis, the current command value iq1*, the rotational speed ω, and the latest value dω (n) of the angular acceleration dω (S10). Note that the angular acceleration dω is described as "dω (n)" to indicate that it is the latest value. The latest values of the current iq of the q-axis, the current command value iq1*, and the rotational speed ω are also obtained.

Next, the CPU 72 determines whether logical conjunction of the following conditions (a1), (b1), (c1) is true (S12). This processing is executed to determine whether the end abutment has occurred by turning the steering wheel 12 to the right turn side.

A condition (a1) is a condition that the angular acceleration dω(n - 1) obtained in the processing of step S10 in the last control period before the series of the processing shown in FIG. 3 is equal to or higher than a tentative determination acceleration threshold dωth1. Here, the tentative determination acceleration threshold dωth1 is set to a negative value that is a value at the time when the magnitude of the rotational speed ω is decreased.

A condition (b1) is a condition that the angular acceleration dω(n) obtained in the processing of step S10 is lower than the tentative determination acceleration threshold dωth1. When the logical conjunction of the condition (b1) and the condition (a1) is true, a time point at which the axial displacement of the rack shaft 30 is abruptly decreased can be detected. In other words, the occurrence of the end abutment can be detected.

A condition (c1) is a condition that the rotational speed ω is higher than a tentative determination speed threshold ωth1. This condition is set to execute processing during the end abutment, which will be described below, only when the rack shaft 30 comes into contact with the rack housing 38 vigorously. The tentative determination speed threshold ωth1 is set on the basis of a value that should be obtained as the rotational speed ω in the case where the rack shaft 30 comes into contact with the rack housing 38 vigorously.

When determining that the logical conjunction of the above conditions (a1), (b1), (c1) is true (S12: YES), the CPU 72 determines whether a value obtained by adding "Kie · dω(n)" to the current iq of the q-axis is smaller than the current command value iq1* of the q-axis (S14). This processing is executed to determine which of the current command value iq1* of the q-axis and "iq + Kie · dω(n)" is close to the current iq of the q-axis that actually flows immediately before the end abutment.

Here, an absolute value of "Kie · dω(n)" is an estimated value of an increase amount by which an absolute value of the current iq of the q-axis is increased by the end abutment. That is, due to the end abutment, the magnitude of the rotational speed ω is abruptly decreased, and a magnitude of an induced voltage of the motor 50 is abruptly decreased. Here, when resistance R, an inductance L, an induced voltage constant φ, and a differential operator p of the motor 50 are used, a relationship expressed by the following expression (c1) is established between the current iq of the q-axis and a voltage vq of the q-axis.

$$vq = R \cdot iq + \omega \cdot L \cdot id + p \cdot Lq \cdot iq + \omega \cdot \phi \ldots (c1)$$

Immediately before the end abutment, due to the integral element of the q-axis feedback processing portion M22, the voltage command value vq* of the q-axis tends to be an appropriate value for the induced voltage "ω · φ" corresponding to the rotational speed ω at the time such that the current iq of the q-axis is controlled to the current command value iq*. In the case where the magnitude of the rotational speed ω is abruptly decreased due to the end abutment and a magnitude of the induced voltage "ω · φ" is thus abruptly decreased, the magnitude of the voltage vq that is applied to the motor 50 becomes excessively high. Thus, a magnitude of the current iq of the q-axis is increased.

A degree of the increase depends on a degree of a decrease in the magnitude of the rotational speed $\omega$. Accordingly, the increase amount, by which the magnitude of the current iq of the q-axis is increased due to the end abutment, has a positive correlation with an absolute value of the angular acceleration $d\omega(n)$. In view of this, the increase amount by which the q-axis current is increased is estimated as "$(-1) \cdot Kie \cdot d\omega(n)$" with the use of a constant Kie ($> 0$), and the current iq of the q-axis immediately before the end abutment is estimated as "$iq + Kie \cdot d\omega(n)$". However, the constant Kie is set to a small value with a margin such that a magnitude of "$iq + Kie \cdot d\omega(n)$" does not become smaller than the magnitude of the current iq of the q-axis immediately before the end abutment.

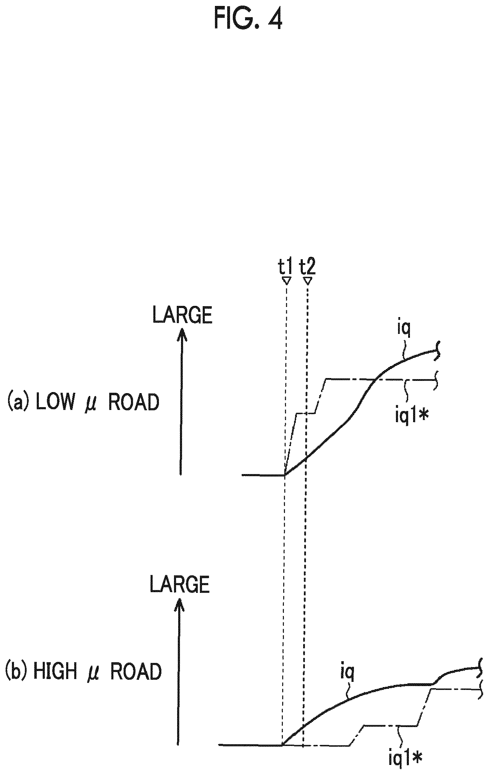

Here, the principle of the processing in step S14 will be described with reference to FIG. 4. FIG. 4 shows changes of the current iq of the q-axis and the current command value iq1* in the case where the end abutment occurs at time t1. In particular, (a) in FIG. 4 shows the changes of the current iq of the q-axis and the current command value iq1* on a so-called low $\mu$ road that is a road surface with a small friction coefficient on which the vehicle is traveling, and (b) in FIG. 4 shows the changes thereof on a so-called high $\mu$ road that is a road surface with a large friction coefficient on which the vehicle is traveling.

In the case of the low $\mu$ road shown in (a) of FIG. 4, a magnitude of the steering torque Trq that is required for the operation of the steering wheel 12 is small. Thus, the magnitude of the steering torque Trq tends not to be increased. However, when the end abutment occurs, the torsion bar 16 is excessively twisted due to inertia of the steering wheel 12, the rack shaft 30, and the steered wheels 34. Accordingly, the magnitude of the steering torque Trq, which is detected by the torque sensor 64, tends to be abruptly increased as compared to the magnitude of the steering torque Trq before the end abutment. When the magnitude of the steering torque Trq is abruptly increased, the magnitude of the assist command value Trqa* is also abruptly increased. Thus, a magnitude of the current command value iq1* of the q-axis is abruptly increased. For this reason, as compared to the current command value iq1* of the q-axis at time t2 at which it is determined that the end abutment has occurred, a value that is obtained by performing correction on the current iq of the q-axis at the time with the use of "$Kie \cdot d\omega(n)$" is close to the current iq of the q-axis immediately before the end abutment.

In the case of the high $\mu$ road shown in (b) of FIG. 4, the magnitude of the steering torque Trq that is required for the operation of the steering wheel 12 is increased. Accordingly, the magnitudes of the steering torque Trq and the assist command value Trqa* are increased before the end abutment occurs. Thus, the increase amount, by which the magnitude of the assist command value Trqa* is increased as compared to the magnitude of the assist command value Trqa* before the end abutment, tends to be smaller than that in the case of the low $\mu$ road. Due to the abrupt decrease of the induced voltage, the magnitude of the current iq of the q-axis is abruptly increased as shown in the example in (b) of FIG. 4. Thus, it is considered that, on the high $\mu$ road, the current command value iq1* of the q-axis at the time point at which the logical conjunction of the above conditions (a1) to (c1) becomes true is closer to the current iq of the q-axis immediately before the end abutment than the value obtained by performing correction on the current iq at the same time point with the use of "$Kie \cdot d\omega(n)$". This is because, as described above, the constant Kie cannot be (should not be) set to a significantly large value in order to suppress occurrence of a situation where the absolute value of the estimated value is smaller than the absolute value of the current iq of the q-axis immediately before the end abutment.

In both of the cases shown in (a) of FIG. 4 and (b) of FIG. 4, one of the current command value iq1* of the q-axis and "$iq + Kie \cdot d\omega(n)$", which has the smaller absolute value, is closer to the current iq of the q-axis immediately before the end abutment.

Returning to FIG. 3, when a positive determination is made in step S14, the CPU 72 sets the end-time current command value iqth to "$iq + Kie \cdot d\omega(n)$" (S16). When a negative determination is made in step S14, the end-time current command value iqth is set to the current command value iq1* of the q-axis (S18).

When determining that the logical conjunction of the above conditions of (a1), (b1), (c1) is false (S12: NO), the CPU 72 determines whether the logical conjunction of the following conditions (a2), (b2), (c2) is true (S20). This processing is executed to determine whether the end abutment has occurred by turning the steering wheel 12 to the left turn side.

A condition (a2) is a condition that the angular acceleration $d\omega(n - 1)$, which is obtained in the processing of step S10 in the last control period before the series of the processing shown in FIG. 3, is equal to or lower than "$(-1) \cdot d\omega th1$". A condition (b2) is a condition that the angular acceleration $d\omega(n)$, which is obtained in the processing in step S10, is higher than "$(-1) \cdot d\omega th1$".

A condition (c2) is a condition that the rotational speed $\omega$ is lower than "$(-1) \cdot \omega th1$". The conditions (a2), (b2), (c2) respectively correspond to the above conditions (a1), (b1), (c1).

When determining that the logical conjunction of the above conditions (a2), (b2), (c2) is true (S20: YES), the CPU 72 determines whether the value obtained by adding "$Kie \cdot d\omega(n)$" to the current iq of the q-axis is larger than the current command value iq1* of the q-axis (S22). This processing corresponds to the processing in step S14 and is executed to determine whether which of the current command value iq1* of the q-axis and "$iq + Kie \cdot d\omega(n)$" is close to the current iq of the q-axis immediately before the end abutment.

When determining that "$iq + Kie \cdot d\omega(n)$" is larger than the current command value iq1* of the q-axis (S22: YES), the CPU 72 determines that an absolute value of "$iq + Kie \cdot d\omega(n)$" is smaller than an absolute value of the current command value iq1* and thereby sets the end-time current command value iqth to "$iq + Kie \cdot d\omega(n)$" (S24). When

determining that "iq + Kie · dω(n)" is equal to or smaller than the current command value iq1* (S22: NO), the CPU 72 determines that the absolute value of the current command value iq1* is equal to or smaller than the absolute value of "iq + Kie · dω(n)" and thereby sets the end-time current command value iqth to the current command value iq1* (S26).

Note that, when the processing in step S16, S18, S24, or S26 is completed or when the negative determination is made in step S20, the CPU 72 ends the series of the processing shown in FIG. 3.

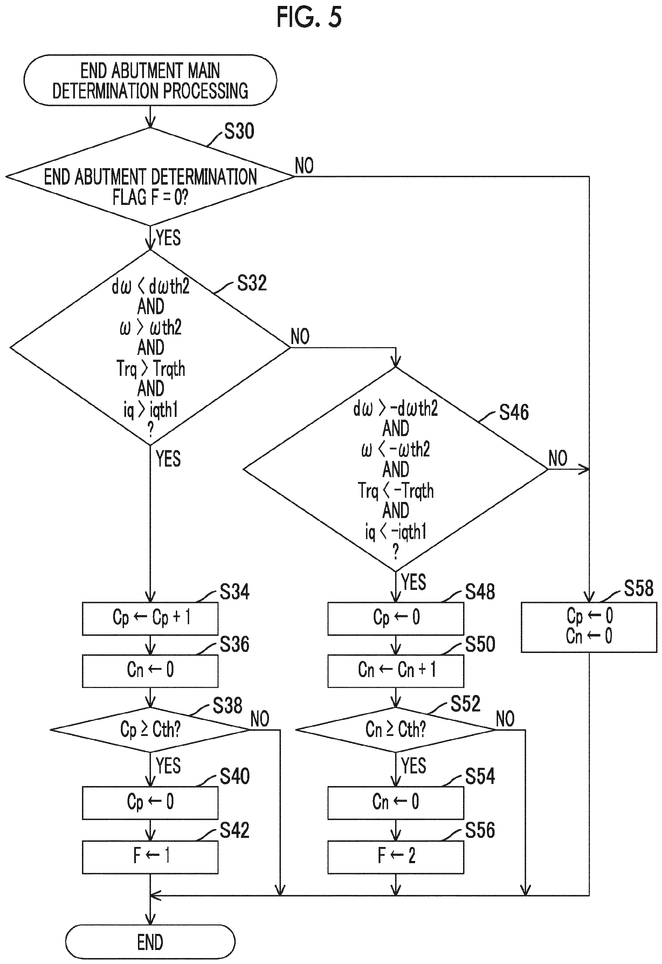

The processing of above steps S12, S20 is end abutment tentative determination processing (that is, in the processing of above steps S12, S20, the CPU 72 tentatively determines whether the end abutment has occurred). Next, end abutment main determination processing with high reliability will be described. FIG. 5 shows a procedure of the end abutment main determination processing. The processing shown in FIG. 5 is realized as processing executed by the end abutment processing portion M36 when the CPU 72 executes the program stored in the memory 74. The processing shown in FIG. 5 is repeatedly executed at specified intervals, for example.

In a series of the processing shown in FIG. 5, the CPU 72 first determines whether an end abutment determination flag F is "0" (S30). When the end abutment determination flag F is "0", the end abutment determination flag F indicates that the end abutment main determination has not been made (i.e., the main determination that the end abutment has occurred has not been made). When the end abutment determination flag F is "1" or "2", the end abutment determination flag F indicates that the end abutment main determination has been made (i.e., the main determination that the end abutment has occurred has been made). When the end abutment determination flag F is "0" (S30: YES), the CPU 72 determines whether logical conjunction of the following conditions (d1), (e1), (f1), (g1) is true (S32). This processing is processing for determining whether the end abutment has occurred by turning the steering wheel 12 to the right turn side.

A condition (d1) is a condition that the angular acceleration dω is lower than a main determination acceleration threshold dωth2. Here, the main determination acceleration threshold dωth2 is set to a smaller negative value than the tentative determination acceleration threshold dωth1.

A condition (e1) is a condition that the rotational speed ω is higher than a main determination speed threshold ωth2. This condition is set to control the current of the motor 50 with the use of the end-time current command value iqth only when the rack shaft 30 comes into contact with the rack housing 38 vigorously. Because the condition (d1) is stricter than the condition (b1), timing at which the condition (d1) is satisfied is later than timing at which the condition (b1) is satisfied, and the rotational speed ω of the rotational shaft 52 is decreased in a period therebetween. In view of this, the main determination speed threshold ωth2 is set to a smaller value than the tentative determination speed threshold ωth1.

A condition (f1) is a condition that the steering torque Trq is higher than a torque threshold Trqth. This condition is set to control the current of the motor 50 with the use of the end-time current command value iqth only when the rack shaft 30 comes into contact with the rack housing 38 with a large force.

A condition (g1) is a condition that the current iq is larger than a main determination current threshold iqth1. This condition is set to control the current of the motor 50 with the use of the end-time current command value iqth only when the rack shaft 30 comes into contact with the rack housing 38 with the large force.

When determining that the above logical conjunction is true (S32: YES), the CPU 72 increments a value of a right turning counter Cp that counts the number of times that the positive determination is made in step S32 (S34). Next, the CPU 72 initializes a left turning counter Cn that counts the number of times that a positive determination is made in step S46, which will be described below (S36). Then, the CPU 72 determines whether the value of the right turning counter Cp is equal to or larger than a threshold Cth (S38). Here, the threshold Cth is an integer of 2 or larger.

When determining that the value of the right turning counter Cp is equal to or larger than the threshold Cth (S38: YES), the CPU 72 initializes the right turning counter Cp (S40) and sets the end abutment determination flag F to "1" (S42). When determining that the logical conjunction of the above conditions (d1), (e1), (f1), (g1) is false (S32: NO), the CPU 72 determines whether logical conjunction of the following conditions (d2), (e2), (f2), (g2) is true (S46). This processing is executed to determine whether the end abutment has occurred by turning the steering wheel 12 to the left turn side.

A condition (d2) is a condition that the angular acceleration dω is higher than "(-1) · dωth2". A condition (e2) is a condition that the rotational speed ω is lower than "(-1) · ωth2". A condition (f2) is a condition that the steering torque Trq is lower than "(-1) · Trqth".

A condition (g2) is a condition that the current iq is smaller than "(-1) · iqth1". When determining that the logical conjunction of the above conditions (d2), (e2), (f2), (g2) is true (S46: YES), the CPU 72 initializes the right turning counter Cp (S48) and increments a value of the left turning counter Cn (S50). Then, the CPU 72 determines whether the value of the left turning counter Cn is equal to or larger than the threshold Cth (S52). When determining that the value of the left turning counter Cn is equal to or larger than the threshold Cth (S52: YES), the CPU 72 initializes the left turning counter Cn (S54) and sets the end abutment determination flag F to "2" (S56).

When a negative determination is made in step S30 or S46, the CPU 72 initializes the right turning counter Cp and the left turning counter Cn (S58). Then, when the processing in step S42, S56, or S58 is completed, or when a negative determination is made in step S38 or S52, the CPU 72 ends the series of the processing shown in FIG. 5.

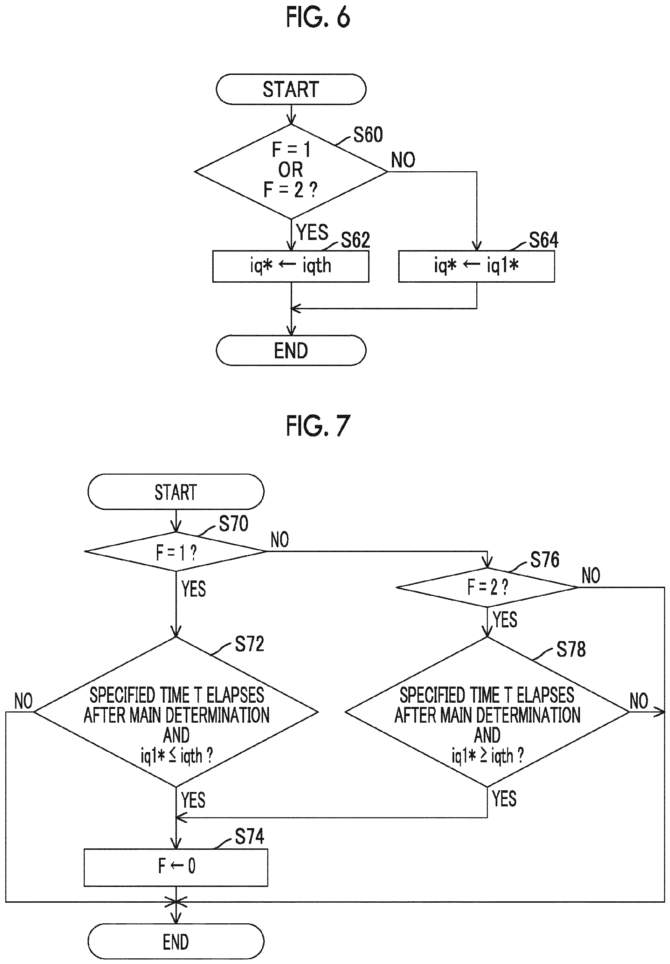

FIG. 6 shows a procedure of processing executed by the switching processing portion M16 shown in FIG. 2. The processing shown in FIG. 6 is repeatedly executed at specified intervals, for example. In the following description, the CPU 72 executes the processing.

In a series of the processing shown in FIG. 6, the CPU 72 first determines whether the end abutment determination flag F is "1" or "2" (S60). This processing is executed to determine whether the end-time current command value iqth is used as the current command value iq*. Then, when determining that the end abutment determination flag F is "1" or "2" (S60: YES), the CPU 72 selects the end-time current command value iqth as the current command value iq* of the q-axis (S62). When determining that the end abutment determination flag F is "0" (S60: NO), the CPU 72 selects the current command value iq1*, which is output by the upper limit guard processing portion M14 shown in FIG. 2, as the current command value iq* of the q-axis (S64).

When the processing in step S62 or S64 is completed, the CPU 72 ends the series of the processing shown in FIG. 6. Next, processing for initializing the end abutment determination flag F will be described.

FIG. 7 shows a procedure of the processing for initializing the end abutment determination flag. The processing shown in FIG. 7 is realized as processing executed by the end abutment processing portion M36 when the CPU 72 executes the program stored in the memory 74. Note that the processing shown in FIG. 7 is repeatedly executed at specified intervals, for example.

In a series of the processing shown in FIG. 7, the CPU 72 determines whether the end abutment determination flag F is "1" (S70). When determining that the end abutment determination flag F is "1" (S70: YES), the CPU 72 determines whether logical conjunction of a condition that specified time T elapses after the end abutment main determination (i.e., after the main determination that the end abutment has occurred is made) and a condition that the current command value iq1* output by the upper limit guard processing portion M14 is equal to or smaller than the end-time current command value iqth is true (S72). The condition that the current command value iq1* is equal to or smaller than the end-time current command value iqth is a condition that the absolute value of the current command value iq1* is equal to or smaller than an absolute value of the end-time current command value iqth. This condition is used to determine whether the magnitude of the current command value iq1* is not larger than a magnitude of the current immediately before the end abutment. Then, when determining that the logical conjunction is true (S72: YES), the CPU 72 sets the end abutment determination flag F to "0" (S74).

When determining that the end abutment determination flag F is not "1" (S70: NO), the CPU 72 determines whether the end abutment determination flag F is "2" (S76). Then, when determining that the end abutment determination flag F is "2" (S76: YES), the CPU 72 determines whether logical conjunction of the condition that the specified time T elapses after the end abutment main determination (i.e., after the main determination that the end abutment has occurred is made) and a condition that the current command value iq1* output by the upper limit guard processing portion M14 is equal to or larger than the end-time current command value iqth is true (S78). The condition that the current command value iq1* is equal to or larger than the end-time current command value iqth is a condition that the absolute value of the current command value iq1* is equal to or smaller than the absolute value of the end-time current command value iqth. Then, when determining that the logical conjunction is true (S78: YES), the CPU 72 sets the end abutment determination flag F to "0" (S74).

When the processing in step S74 is completed or when a negative determination is made in step S72, S76, or S78, the CPU 72 ends the series of the processing shown in FIG. 7. Here, effects of this embodiment will be described.

In the case where the rack shaft 30 comes into contact with the rack housing 38 and thus the axial displacement of the rack shaft 30 is restricted, that is, the end abutment occurs when the steering wheel 12 is turned to the right turn side or the left turn side, the magnitude of the induced voltage of the motor 50 is abruptly decreased. Accordingly, the magnitude of the current iq is increased. When the end abutment tentative determination is made (i.e., the tentative determination that the end abutment has occurred is made), the CPU 72 estimates the current iq of the q-axis that flows through the motor 50 immediately before the tentative determination, and stores the estimated current iq as the end-time current command value iqth in the memory 74. Then, when the end abutment main determination is made (i.e., the main determination that the end abutment has occurred is made), the CPU 72 sets the current command value iq* of the q-axis to the end-time current command value iqth. Thus, the current iq of the q-axis of the motor 50 is controlled to the current immediately before the end abutment. The current immediately before the end abutment corresponds to the current generating the assist torque that is actually output by the motor 50 when the turning angle of the steered wheels 34 is achieved near an axial displacement limit of the rack shaft 30. Accordingly, the current immediately before the end abutment has a value that makes it possible to suppress occurrence of a situation where an impact force due to a collision between the rack housing 38 and the rack shaft 30 is increased by the assist torque.

In the embodiment that has been described so far, the following effects can be further obtained.

(1) The current flowing through the motor 50 immediately before the end abutment is estimated such that the estimated current is one of the current command value iq1* and the value obtained by performing correction to decrease the current iq with the use of "Kic · dω", the magnitude of the one of the current command value iq1* and the obtained value being smaller than that of the other. Thus, regardless of whether the road is the low μ road or the high μ road, the current immediately before the end abutment can be accurately determined.

(2) The upper limit guard processing is executed on the current command value iq0*, which is set by the current command value setting processing portion M12, with the use of the upper limit guard value Ith. When the rotational speed ω is high, the upper limit guard value Ith is smaller than that when the rotational speed ω is low. As compared to the case of the low μ road, the magnitude of the steering torque Trq tends to be increased in the case of the high μ road. As a result, the current command value iq0* tends to be limited to the upper limit guard value Ith even before the occurrence of the end abutment. Accordingly, even when the magnitude of the steering torque Trq is increased by the impact that is generated during the end abutment, this increase is less likely to directly lead to the increase in the magnitude of the current command value iq1*. Thus, on the high μ road, the current command value iq1* during the end abutment tends to be close to the current command value immediately before the end abutment. Accordingly, the utility value of processing for selecting one of the current command value iq1* and the value obtained by performing correction to decrease the current iq with the use of "Kic · dω" is especially high, the magnitude of the one of the current command value iq1* and the obtained value being smaller than that of the other.

(3) The updating interval of the upper limit guard value Ith used by the upper limit guard processing portion M14 is set to be longer than the sampling intervals of the currents iq, id, the updating interval of the assist command value Trqa*, the control period of the q-axis feedback processing portion M22, and so on. In this case, time, which is required to update the upper limit guard value Ith to the value changed in accordance with the decrease in the magnitude of the rotational speed ω due to the end abutment, tends to be long. Thus, on the high μ road, the current command value iq1* during the end abutment tends to be closer to the current command value immediately before the end abutment.

(4) The current iq of the q-axis that flows through the motor 50 immediately before the end abutment is estimated at a time point at which tentative determination processing is executed, and the processing for limiting the current command value iq* to the end-time current command value iqth is executed after the main determination. Thus, it is possible to accurately estimate the current immediately before the end abutment and to set the current command value iq* to the end-time current command value iqth when there is high certainty of the occurrence of the end abutment.

Hereinafter, a second embodiment will be described with a focus on a difference between the second embodiment and the first embodiment, with reference to the drawings.

In the above first embodiment, the end-time current command value iqth is set to an estimated value of the current iq immediately before the end abutment tentative determination (i.e., immediately before the tentative determination that the end abutment has occurred is made). In contrast, a value that is obtained by performing correction to decrease this estimated value is used.

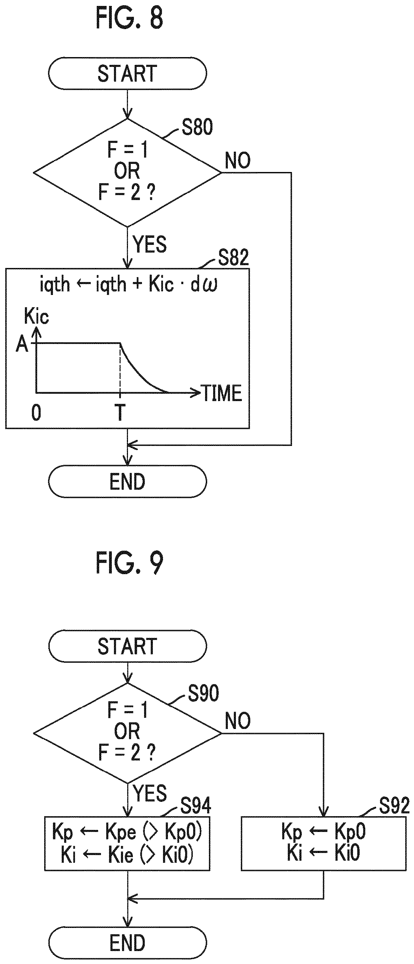

FIG. 8 shows a procedure of processing for performing correction on the end-time current command value iqth according to this embodiment. The processing shown in FIG. 8 is realized as processing executed by the end abutment processing portion M36 when the CPU 72 executes the program stored in the memory 74. The processing shown in FIG. 8 is repeatedly executed at specified intervals, for example.

In a series of the processing shown in FIG. 8, the CPU 72 first determines whether the end abutment determination flag F is "1" or "2" (S80). Then, when determining that the end abutment determination flag F is "1" or "2" (S80: YES), the CPU 72 performs correction on the absolute value of the end-time current command value iqth by adding "Kic · dω" to the end-time current command value iqth computed in the processing in FIG. 3 (S82). Here, the coefficient Kic is a value that is equal to or larger than zero. In this embodiment, the coefficient Kic is set to a fixed value A in a period until the specified time T elapses after the end abutment main determination is made (i.e., the main determination that the end abutment has occurred is made), and the coefficient Kic is set to be gradually decreased to zero after the specified time T elapses.

When the processing in step S82 is completed, or when a negative determination is made in step S80, the CPU 72 ends the series of the processing shown in FIG. 8. Here, effects of this embodiment will be described.

When the end abutment main determination is made (i.e., when the main determination that the end abutment has occurred is made), the CPU 72 controls the current iq flowing through the motor 50 to the end-time current command value iqth. In this period, the magnitude of the rotational speed ω is decreased by the end abutment. Accordingly, a magnitude of the voltage command value vq* of the q-axis that is output by the q-axis feedback processing portion M22 shown in FIG. 2 is larger than an appropriate value for controlling the current iq to the value that is estimated as the current iq immediately before the end abutment in the processing shown in FIG. 3. The q-axis feedback processing portion M22 decreases the magnitude of the voltage command value vq* of the q-axis in accordance with a degree by which the magnitude of the current iq exceeds the magnitude of the current command value iq*. Here, in this embodiment, a magnitude of the end-time current command value iqth is set to be a smaller value than the value which is estimated in the processing in FIG. 3 and to which the current iq is actually desired to be controlled. In other words, the magnitude of the current command value iq* is set to be the smaller value than the value estimated in the processing in FIG. 3. Accordingly, as compared to the case where the current command value iq* is set to the value estimated in the processing in FIG. 3, the magnitude of the voltage command value vq* of the q-axis can be promptly decreased.

In particular, a degree, by which the magnitude of the end-time current command value iqth is corrected to be decreased, is increased with an increase in an absolute value of the angular acceleration dω. Thus, a degree, by which the magnitude of the end-time current command value iqth is corrected to be decreased, can be increased with an increase in a decrease rate of the magnitude of the induced voltage. Accordingly, a decrease rate of the absolute value of the voltage command value vq* of the q-axis can be increased with the increase in the decrease rate of the magnitude of the induced voltage. Thus, it is possible to suppress occurrence of a situation where the absolute value of the current iq of the q-axis becomes excessively larger than an absolute value of the value estimated in the processing shown in FIG. 3.

Hereinafter, a third embodiment will be described with a focus on a difference between the third embodiment and the first embodiment, with reference to the drawings.

In this embodiment, a feedback gain of the q-axis feedback processing portion M22 is set to be variable based on whether the end abutment has occurred. FIG. 9 shows a procedure of variable setting processing for the feedback gain. The processing shown in FIG. 9 is realized as processing executed by the q-axis feedback processing portion M22 when the CPU 72 executes the program stored in the memory 74. Note that the processing shown in FIG. 9 is repeatedly executed at specified intervals, for example.

In a series of the processing shown in FIG. 9, the CPU 72 first determines whether the end abutment determination flag F is "1" or "2" (S90). Then, when determining that the end abutment determination flag F is "0" (S90: NO), the CPU 72 sets the proportional gain Kp to a normal gain Kp0 and sets an integral gain Ki to a normal gain Ki0 (S92). When determining that the end abutment determination flag F is "1" or "2" (S90: YES), the CPU 72 sets the proportional gain Kp to an end-time gain Kpe larger than the normal gain Kp0 and sets the integral gain Ki to an end-time gain Kie larger than the normal gain Ki0 (S94).

Note that, when the processing in step S92 or S94 is completed, the CPU 72 ends the series of the processing shown in FIG. 9. Thus, in this embodiment, when the end abutment determination flag F is "1" or "2", the voltage command value vq* of the q-axis can be promptly decreased by increasing the feedback gain. Further, when the end abutment determination flag F is "0", the feedback gain is decreased to be a smaller value than that in the case where the end abutment determination flag F is "1" or "2". In this way, the control can be stabilized.

In the following description, "the CPU 72 that executes specified processing in accordance with the program stored in the memory 74" will be described as "the CPU 72 that executes the specified processing" for simplifying the description.

The end determination processing portion may be regarded as the CPU 72 that executes the processing in steps S12, S20, S32 to S42, and S46 to S56. The end-time limit processing portion may be regarded as the CPU 72 that executes the processing in step S62 in the first or third embodiment. The end-time limit processing portion may be regarded as the CPU 72 that executes the processing in steps S62, S82 in the second embodiment. The feedback processing portion may be regarded as the q-axis feedback processing portion M22, and the steering control device may be regarded as the control device 70. The limited current value may be regarded as "iq + Kie · dω(n)".

The command value setting processing portion may be regarded as the assist torque setting processing portion M10, the current command value setting processing portion M12, and the upper limit guard processing portion M14. The estimation processing portion may be regarded as the CPU 72 that executes the processing in steps S14 to S18 and S22 to S26.

The current command value, which is subjected to the upper limit guard processing, may be regarded as the current command value iq1* of the q-axis. The tentative determination processing portion may be regarded as the CPU 72 that executes the processing in steps S12 and S20. The main determination processing portion may be regarded as the CPU 72 that executes the processing in steps S32 to S42 and S46 to S56.

The end-time limit processing portion may be regarded as the CPU 72 that executes the processing in steps S62 and S82. Variable setting of the gain by the feedback processing portion may be regarded as the CPU 72 that executes the processing shown in FIG. 9.

Note the above embodiments may be changed as follows. The tentative determination processing portion is not limited to the tentative determination processing portion that tentatively determines that the end abutment has occurred when the logical conjunction of the above conditions (a1) to (c1) is true or when the logical conjunction of the above conditions (a2) to (c2) is true. For example, the above condition (c1) and the above condition (c2) may be removed, and the tentative determination that the end abutment has occurred may be made when logical condition of the above condition (a1) and the above condition (b1) is true or when logical condition of the above condition (a2) and the above condition (b2) is true.

The tentative determination that the end abutment has occurred may be made when the above condition (b1) is satisfied in the subsequent control period after the control period in which the positive determination is made in step S12 or when the above condition (b2) is satisfied in the subsequent control period after the control period in which the positive determination is made in step S20. Note that, the tentative determination acceleration threshold d$\omega$th1 may be set to zero, instead of being set to the negative value.

The main determination processing portion is not limited to the main determination processing portion that makes the main determination that the end abutment has occurred on the basis of a fact that the logical conjunction of the above conditions (d1) to (g1) is true or a fact that the logical conjunction of the above conditions (d2) to (g2) is true. For example, the main determination processing portion may make the main determination that the end abutment has occurred on the basis of a fact that logical conjunction of the above conditions (d1) to (f1) is true or a fact that logical conjunction of the above conditions (d2) to (f2) is true. For example, the main determination processing portion may make the main determination that the end abutment has occurred on the basis of a fact that logical conjunction of the above conditions (d1), (e1), and (g1) is true or a fact that logical conjunction of the above conditions (d2), (e2), and (g2) is true. Further, for example, the main determination processing portion may make the main determination that the end abutment has occurred on the basis of a fact that logical conjunction of the above conditions (d1) and (e1) is true or a fact that logical conjunction of the above conditions (d2) and (e2) is true.

The configuration in which the condition for making the main determination is stricter than the condition for making the tentative determination is not limited to the configuration described in the above embodiments. For example, only one of i) the configuration in which the absolute value of the main determination acceleration threshold d$\omega$th2 is larger than the absolute value of the tentative determination acceleration threshold d$\omega$th1 and ii) the configuration in which the number of times that the condition using the main determination acceleration threshold d$\omega$th2 should be satisfied is larger than the number of times that the condition using the tentative determination acceleration threshold d$\omega$th1 should be satisfied, may be employed. For example, it is possible to employ the configuration in which the absolute value of the main determination acceleration threshold d$\omega$th2 is set to be larger than the absolute value of the tentative determination acceleration threshold d$\omega$th1, and the main determination is made when the positive determination is made once in step S32 or S46 in FIG. 5, and/or the tentative determination is made when the above condition (b1) is satisfied a plurality of times. The tentative determination acceleration threshold d$\omega$th1 in the processing in FIG. 3 may be equal to the main determination acceleration threshold d$\omega$th2 in the processing in FIG. 5.

The end determination processing portion is not limited to the end determination processing portion that determines that the end abutment has occurred on the basis of a decrease in the absolute value of the rotational speed $\omega$. For example, the end determination processing portion may determine that the end abutment has occurred on the basis of the steering torque Trq and a changing rate thereof. More specifically, for example, the end determination processing portion may determine that the end abutment has occurred on the condition that the magnitude of the steering torque is equal to or higher than a specified value and an absolute value of a changing rate of the steering torque is equal to or higher than a prescribed value.

The tentative determination processing portion and the main determination processing portion may not be provided. For example, the end abutment determination flag may be set to "1" when the CPU 72 makes the positive determination in step S12 in FIG. 3, and the end abutment determination flag may be set to "2" when the CPU 72 makes the positive determination in step S20 in FIG. 3.

For example, even when the q-axis feedback processing portion M22 has a proportional element and so on in addition to the integral element as in the processing in FIG. 9, only the integral gain Ki may be changed upon the occurrence of the end abutment.

In the second embodiment, the processing in FIG. 9 may be executed as in the third embodiment. In the above embodiment, as the current immediately before the end abutment, which is the appropriate current for setting the assist torque of the motor 50 to an appropriate value during the end abutment, the current of the q-axis immediately before the end abutment is particularly estimated. However, the current to be estimated is not limited thereto. For example, in the case where current components in a rotation coordinate system, which are respectively deviated from the d, q-axes by specified angles, are controlled to the current command values thereof, the current components may be estimated. In this case, one of a value obtained by performing correction to decrease each of the paired components with the use of "Kie · d$\omega$" and the corresponding current command value may be used as the estimated value of the current immediately before the end abutment, the magnitude of the one of the obtained value and the corresponding current command value being smaller than that of the other.

Furthermore, the estimated value is not limited to the component (a DC component) in the rotation coordinate system. For example, the estimated value may be an amplitude of the current in a fixed coordinate system or a norm of a current vector in the rotation coordinate system. Here, the norm is different from the amplitude only in constant multiple. In a surface permanent magnet synchronous motor (SPM) and in an interior permanent magnet synchronous motor (IPMSM), when minimum current maximum torque control is executed, the norm has a one-to-one corresponding relationship with the paired current components in the rotation coordinate system. Accordingly, when the norm can be estimated, the paired current components in the rotation coordinate system immediately before the end abutment can be estimated on the basis of the estimated norm. For example, one of "N + Kie · d$\omega$" using a norm N at the time when the end abutment tentative determination is made and the norm of a current command value vector in the rotation coordinate system may be used as the norm immediately before the end abutment, the magnitude of the one of "N + Kie · dω" and the current command value vector being smaller than that of the other.

When weak field control is executed with the use of the SPM, only the current iq of the q-axis may be selected as an estimation target. The estimation processing portion is not limited to the estimation processing portion that estimates the current immediately before the end abutment such that the estimated current immediately before the end abutment is one of "iq + Kie · dω" and the current command value iq1*, the magnitude of the one of "iq + Kie · dω" and the current command value iq1* being smaller than that of the other. For example, the estimation processing portion may estimate the current immediately before the end abutment such that the estimated current immediately before the end abutment is "iq + Kie · dω". Even in the case where this estimated value is used when the end abutment main determination is made, the current command value iq* can be made closer to the current value immediately before the end abutment, as compared to the case where the current iq at the time when the end abutment tentative determination is made is used.

In the above embodiment, the updating interval of the upper limit guard value Ith used by the upper limit guard processing portion M14 is set to be longer than the sampling period of the current iq, the updating interval of the assist command value Trqa*, the control period of the q-axis feedback processing portion M22, and so on. However, the updating interval of the upper limit guard value Ith is not limited thereto. In view of a fact that, even when the updating interval of the upper limit guard value Ith is shortened, the magnitude of the current iq of the q-axis is abruptly increased by an abrupt decrease in the magnitude of the induced voltage due to the end abutment, the absolute value of the current command value iq1* may become smaller than the absolute value of the current iq at the time point at which the end abutment tentative determination is made on a high u road. Accordingly, it is considered that the current command value iq1* is closer to the current iq of the q-axis of the motor 50 immediately before the end abutment. Thus, the execution of the processing in steps S14 to S18 and S22 to S26 by the CPU 72 is effective.

The current control is not limited to the control that sets the voltage command value vq* to the sum of the output values of the proportional element and the integral element, the output values of the proportional element and the integral element being obtained by using, as the input, the difference between the current iq of the q-axis and the current command value iq*. For example, the voltage command value vq* may be set to the output value of the integral element. The current control may be control that sets the voltage command value vq* by taking the output value of a derivative element into consideration. In this case, with the derivative element, it is possible to suppress occurrence of a situation where the absolute value of the voltage command value vq* becomes excessively larger than an appropriate value thereof for controlling the current iq to the current command value iq* due to the abrupt decrease in the magnitude of the induced voltage. Note that, in this case as well, the processing in the second embodiment and the processing in the third embodiment may be executed.

The current control is not limited to the control that sets the voltage command value vd* to the sum of the output values of the proportional element and the integral element, the output values of the proportional element and the integral element being obtained by using, as the input, the difference between the current id of the d-axis and the current command value id*. For example, the voltage command value vd* may be set to the output value of the integral element. The current control may be control that sets the voltage command value vd* by taking the output value of the derivative element into consideration.

The current control is not limited to the control that sets the voltage command value vd* of the d-axis as a feedback manipulative variable of the d-axis. For example, the voltage command value vd* of the d-axis may be set as a sum of the feedback manipulative variable of the d-axis and an open-loop manipulative variable "(-1) · ω · L · iq" in decoupling control. Here, an inductance L is used.

The current control is not limited to the control that sets the voltage command value vq* of the q-axis as a feedback manipulative variable of the q-axis. For example, the voltage command value vq* of the q-axis may be set as a sum of the feedback manipulative variable of the q-axis and an open-loop manipulative variable "ω · L · id" in the decoupling control. Furthermore, the voltage command value vq* of the q-axis may be set as a sum of the feedback manipulative variable of the q-axis, the open-loop manipulative variable in the decoupling control, and an open-loop manipulative variable "ω · φ" corresponding to the induced voltage. In the case where the open-loop manipulative variable corresponding to the induced voltage is used and changing of the open-loop manipulative variable is delayed due to a set updating interval of the open-loop manipulative variable or a set updating interval of the rotational speed ω as an input for the updating of the open-loop manipulative variable when the magnitude of the induced voltage is abruptly decreased by the end abutment, the voltage command value vq* may become excessively larger than an appropriate value. In such a case, execution of the processing in each of the second and third embodiments is effective.

In the above embodiment, the current command value id* of the d-axis is set to zero. However, the current command value id* is not limited thereto. For example, the current command value id* may be set to a negative value, and the weak field control may be executed. Control of current components in a two-dimensional rotation coordinate system to command values thereof is not limited to control of the current components on the d, q-axes. For example, current components in a rotation coordinate system, which are deviated from the d, q-axes by specified angles, may be controlled to command values thereof.

In addition, control of current components in the two-dimensional rotation coordinate system to the command values thereof is not limited to the feedback control. For example, so-called model prediction control may be executed to receive the current in the two-dimensional rotation coordinate system as an input, to predict a future current in a case where each of the plurality of switching modes is selected, and to actually adopt the switching mode for decreasing a difference between this predicted value and the command value. In this case, even when the magnitude of the induced voltage is abruptly decreased, the current can be promptly controlled to the current command value. However, the processing in FIG. 3 is effective at least for appropriately setting the current command value.

The upper limit guard processing portion M14 may not be provided. On the high $\mu$ road, the magnitude of the required steering torque is large, and accordingly, the magnitudes of the steering torque and the assist torque tend to be increased before the turning angle reaches the limit angle. Thus, on the high $\mu$ road, an increase amount, by which the magnitude of the assist torque command value is increased at the time when the turning angle reaches the limit angle, tends to be smaller than that on the low $\mu$ road. For this reason, even in the case where the upper limit guard processing portion M14 is not provided, the magnitude of the current command value may be smaller than the magnitude of the detected value of the current on the high $\mu$ road when the turning angle reaches the limit angle. Thus, the processing in steps S14 to S18 and S22 to S26, and so on are effective.

In the processing in FIG. 8, after Kic in "Kic · d$\omega$" is set to a constant value that is larger than zero for the specified time T, the Kic is gradually decreased to zero. In addition, the specified time T is set to coincide with the specified time T in steps S72, S78 in FIG. 7. However, the invention is not limited to this control. In other words, the specified time T in the processing in FIG. 8 may not coincide with the specified time T in steps S72, S78 in FIG. 7.

In the case where an interior permanent magnet synchronous motor (IPMSM) is used, the processing in step S82 may be executed in the processing in FIG. 8, and the absolute value of the current command value id* of the d-axis may be corrected to be decreased in accordance with a degree of the decrease in the magnitude of the rotational speed $\omega$. In this way, reluctance torque can be decreased. Thus, it is possible to further suppress occurrence of a phenomenon in which the torque of the motor 50 is increased due to the end abutment.

With regard to the end-time limit processing portion, for example, in the above second embodiment, the conditions for ending the processing of limiting the current command value iq* with the use of the end-time current command value iqth may be changed as follows. More specifically, instead of executing the processing in step S72 in FIG. 7, only a condition that the current command value iq1* is equal to or smaller than the end-time current command value iqth may be used. Instead of executing the processing in step S78, only a condition that the current command value iq1* is equal to or larger than the end-time current command value iqth may be used.

The limit angle as the upper limit value of the absolute value of the turning angle of the steered wheels 34 is not limited to the turning angle at the time when the rack shaft 30 comes into contact with the rack housing 38, the limit angle being determined by a structure of the steering system 10. For example, in the case where a spiral cable is attached to the steering wheel 12 and the rack shaft 30 does not come into contact with the rack housing 38 at a time when the absolute value of the steering angle of the steering wheel 12 becomes the upper limit value determined by the spiral cable, the limit angle may be the maximum value of the turning angle that is determined by the spiral cable. However, as will be described later, when the steering system includes the actuator that varies a steering angle ratio, the limit angle is a value that is changed in accordance with the steering angle ratio.

A permanent magnet synchronous motor is not limited to the SPM and may be the IPMSM, for example, as described above. In addition, the motor is not limited to the permanent magnet synchronous motor. For example, the motor may be a DC motor. The motor may be a wound-field synchronous motor that does not include a permanent magnet. In the case where a rotor does not include the permanent magnet, when the magnitude of the rotational speed is abruptly decreased, the magnitude of the current flowing through a stator coil may be abruptly increased due to the abrupt decrease in the magnitude of the induced voltage. Thus, the execution of the processing in steps S14 to S18 and S22 to S26, the execution of the processing in each of the second and third embodiments, and execution of the processing in each of modified examples thereof are effective.

The control device 70 is not limited to the control device that includes the CPU 72 and the memory 74, and executes all of the above-described various kinds of processing as software processing. For example, the control device 70 may include dedicated hardware (an application specific integrated circuit: ASIC) that executes at least a part of processing (e.g., at least a part of the processing shown in FIG. 3).

The steering system is not limited to the steering system in which the rotational angle (the steering angle) of the steering wheel 12 corresponds to the turning angle of the steered wheels 34 on one-to-one basis. For example, the steering system may include a steering angle ratio variable actuator, and may be configured such that the steering angle ratio can be changed by electronic control, the steering angle ratio being a ratio between the steering angle and the turning angle.

The turning actuator PSA is not limited to the turning actuator of a rack and pinion type. For example, a turning actuator of a rack cross type, a rack parallel (registered trademark) type, a rack coaxial type, or the like may be employed.

**Claims**

1. A steering control device (70) configured to control a steering system (10) including a turning actuator (PSA) that turns steered wheels (34) of a vehicle, the steering system (10) assisting turning of the steered wheels (34) in accordance with steering of a steering wheel (12), the turning actuator (PSA) including a motor (50), the steering control device (70), comprising:

   a feedback processing portion (M22) configured to control through feedback a current (iq) flowing through the motor (50) to a current command value (iq*);
   an end determination processing portion (72) configured to determine whether a turning angle of steered wheels (34) has reached a limit angle determined by a structure of the steering system (10); and
   an end-time limit processing portion (72) configured to limit (S62) a magnitude of the current command value (iq*) for the motor (50) to a magnitude of a limited current value or smaller, when the end determination processing portion (72) determines that the turning angle has reached the limit angle, **characterized in that**
   the limited current value is a value obtained by performing correction to decrease a magnitude of a detected value of the current (iq) flowing through the motor (50) at a time when the end determination processing portion (72) determines that the turning angle has reached the limit angle, based on a degree of a decrease in a magnitude of a rotational speed ($\omega$) of the motor (50).

2. The steering control device (70) according to claim 1, wherein:

   the steering control device (70) further includes a command value setting processing portion (M10, M12, M14) configured to set the current command value (iq*) based on a detected value of steering torque (Trq);
   the command value setting processing portion is configured to set the magnitude of the current command value (iq*) such that the magnitude of the current command value (iq*) at a time when a magnitude of the detected value of the steering torque (Trq) is large is larger than the magnitude of the current command value (iq*) at a time when the magnitude of the detected value of the steering torque (Trq) is small;
   the steering control device (70) further includes an estimation processing portion (72) configured to estimate the current flowing through the motor (50) immediately before the turning angle reaches the limit angle such that the estimated current (iqth) is one of the current command value (iq1*) set by the command value setting processing portion (M10, M12, M14) and the limited current value, when the end determination processing portion (72) determines that the turning angle has reached the limit angle, the magnitude of the one of the current command value (iq1*) and the limited current value being smaller than that of the other; and
   the end-time limit processing portion (72) is configured to set (S62) the current command value (iq*) to a value that is equal to or smaller than a magnitude of the current (iqth) estimated by the estimation processing portion (72).

3. The steering control device (70) according to claim 2, wherein:

   the command value setting processing portion (M10, M12, M14) includes an upper limit guard processing portion (M14) configured to execute upper limit guard processing on the magnitude of the current command value (iq*);
   the upper limit guard processing portion (M14) is configured to set an upper limit guard value (Ith) of the current command value (iq*) such that the upper limit guard value (Ith) at a time when the magnitude of the rotational speed ($\omega$) of the motor (50) is large is smaller than the upper limit guard value (Ith) at a time when the magnitude of the rotational speed ($\omega$) of the motor (50) is small; and
   the estimation processing portion (72) is configured to estimate the current flowing through the motor (50) immediately before the turning angle reaches the limit angle such that the estimated current (iqth) is one of the current command value (iq1*) that is subjected to the upper limit guard processing and the limited current value, the magnitude of the one of the current command value (iq1*) and the limited current value being smaller than that of the other.

4. The steering control device (70) according to claim 2 or 3, wherein:

   the end determination processing portion (72) includes a tentative determination processing portion (72) configured to make a tentative determination that the turning angle has reached the limit angle, and a main determination processing portion (72) configured to make a main determination that the turning angle has reached the limit angle;
   a condition based on which the main determination processing portion (72) determines that the turning angle has reached the limit angle is a stricter condition than a condition based on which the tentative determination processing portion determines that the turning angle has reached the limit angle;

the estimation processing portion (72) is configured to estimate the current flowing through the motor (50) immediately before the turning angle reaches the limit angle such that the estimated current (iqth) is one of the limited current value and the current command value (iq1*) at a time when the tentative determination processing portion determines that the turning angle has reached the limit angle, the magnitude of the one of the limited current value and the current command value(iq1*) being smaller than that of the other, and the limited current value being a value that is obtained by performing correction to decrease the magnitude of the detected value of the current (iq) flowing through the motor (50) at the time when the tentative determination processing portion determines that the turning angle has reached the limit angle, based on the degree of the decrease in the magnitude of the rotational speed ($\omega$) of the motor (50); and

the end-time limit processing portion (72) is configured to limit the magnitude of the current command value (iq*) for the motor (50) to the magnitude of the current (iqth) estimated by the estimation processing portion (72) or smaller, when the main determination processing portion (72) determines that the turning angle has reached the limit angle.

5. The steering control device (70) according to any one of claims 2 to 4, wherein:

the feedback processing portion (M22) is configured to control a voltage (vq*) that is applied to the motor (50) based on an output value of an integral element obtained by using, as an input, a difference between the current (iq) flowing through the motor (50) and the current command value (iq*); and

the end-time limit processing portion (72) is configured to set (S62) the current command value (iq*) to a value obtained by performing correction to decrease the magnitude of the current (iqth) estimated by the estimation processing portion (72), based on the degree of the decrease in the magnitude of the rotational speed ($\omega$) of the motor (50).

6. The steering control device (70) according to any one of claims 1 to 5, wherein:

the feedback processing portion (M22) is configured to control a voltage (vq*) that is applied to the motor (50) based on an output value of an integral element obtained by using, as an input, a difference between the current (iq) flowing through the motor (50) and the current command value (iq*); and

when the end-time limit processing portion (72) executes processing of limiting the magnitude of the current command value (iq*) for the motor (50) to the magnitude of the limited current value or smaller, the feedback processing portion (M22) makes (S94) a gain (Ki) of the integral element larger than that (Ki0) when the end-time limit processing portion (72) does not execute the processing.

**Patentansprüche**

1. Lenksteuerungsvorrichtung (70), die konfiguriert ist, um ein Lenksystem (10) zu steuern, das ein Drehstellglied (PSA) umfasst, das gelenkte Räder (34) eines Fahrzeugs dreht, wobei das Lenksystem (10) ein Drehen der gelenkten Räder (34) in Übereinstimmung mit einem Lenken eines Lenkrads (12) unterstützt, wobei das Drehstellglied (PSA) einen Motor (50) umfasst, wobei die Lenksteuerungsvorrichtung (70) aufweist:

einen Rückkopplungs-Verarbeitungsabschnitt (M22), der konfiguriert ist, um durch Rückkopplung einen Strom (iq), der durch den Motor (50) fließt, zu einem Strombefehlswert (iq*) zu steuern;

einen Endbestimmungs-Verarbeitungsabschnitt (72), der konfiguriert ist, um zu bestimmen, ob ein Drehwinkel von gelenkten Rädern (34) einen durch eine Struktur des Lenksystems (10) bestimmten Grenzwinkel erreicht hat; und

einen Endzeitbegrenzungs-Verarbeitungsabschnitt (72), der konfiguriert ist, um eine Größe des Strombefehlswerts (iq*) für den Motor (50) auf eine Größe eines begrenzten Stromwerts oder kleiner zu begrenzen (S62), wenn der Endbestimmungs-Verarbeitungsabschnitt (72) bestimmt, dass der Drehwinkel den Grenzwinkel erreicht hat, **dadurch gekennzeichnet, dass**

der begrenzte Stromwert ein Wert ist, der durch Ausführen einer Korrektur erhalten wird, um eine Größe eines erfassten Werts des Stroms (iq), der durch den Motor (50) fließt, zu einem Zeitpunkt zu verringern, wenn der Endbestimmungs-Verarbeitungsabschnitt (72) bestimmt, dass der Drehwinkel den Grenzwinkel erreicht hat, basierend auf einem Grad einer Verringerung einer Größe einer Drehzahl ($\omega$) des Motors (50).

2. Lenksteuerungsvorrichtung (70) nach Anspruch 1, wobei:

die Lenksteuerungsvorrichtung (70) ferner einen Befehlswert-Einstellverarbeitungsabschnitt (M10, M12, M14) umfasst, der konfiguriert ist, um den Strombefehlswert (iq*) basierend auf einem erfassten Wert des Lenkmoments (Trq) einzustellen;
der Befehlswert-Einstellverarbeitungsabschnitt konfiguriert ist, um die Größe des Strombefehlswerts (iq*) derart einzustellen, dass die Größe des Strombefehlswerts (iq*) zu einem Zeitpunkt, wenn eine Größe des erfassten Wertes des Lenkmoments (Trq) groß ist, größer ist als die Größe des Strombefehlswerts (iq*) zu einem Zeitpunkt, wenn die Größe des erfassten Wertes des Lenkmoments (Trq) klein ist;
die Lenksteuerungsvorrichtung (70) ferner einen Schätzverarbeitungsabschnitt (72) umfasst, der konfiguriert ist, um unmittelbar bevor der Drehwinkel den Grenzwinkel erreicht den durch den Motor (50) fließenden Strom derart zu schätzen, dass der geschätzte Strom (iqth) einer von dem Strombefehlswert (iq1*), der durch den Befehlswert-Einstellverarbeitungsabschnitt (M10, M12, M14) eingestellt wird, und dem begrenzten Stromwert ist, wenn der Endbestimmungs-Verarbeitungsabschnitt (72) bestimmt, dass der Drehwinkel den Grenzwinkel erreicht hat, wobei die Größe der einen von dem Strombefehlswert (iq1*) und dem begrenzten Stromwert kleiner ist als die des anderen; und
der Endzeitbegrenzungs-Verarbeitungsabschnitt (72) konfiguriert ist, um den Strombefehlswert (iq*) auf einen Wert zu setzen (S62), der gleich oder kleiner als eine Größe des Stroms (iqth) ist, der durch den Schätzverarbeitungsabschnitt (72) geschätzt wird.

3. Lenksteuerungsvorrichtung (70) nach Anspruch 2, wobei
der Befehlswert-Einstellverarbeitungsabschnitt (M10, M12, M14) einen Obergrenzenschutz-Verarbeitungsabschnitt (M14) umfasst, der konfiguriert ist, um eine Obergrenzenschutzverarbeitung an der Größe des Strombefehlswerts (iq*) auszuführen;
der Obergrenzenschutz-Verarbeitungsabschnitt (M14) konfiguriert ist, um einen Obergrenzenschutzwert (Ith) des Strombefehlswerts (iq*) derart einzustellen, dass der Obergrenzenschutzwert (Ith) zu einem Zeitpunkt, wenn die Größe der Drehzahl (ω) des Motors (50) groß ist, kleiner ist als der Oberengrenzschutzwert (Ith) zu einem Zeitpunkt, wenn die Größe der Drehzahl (ω) des Motors (50) klein ist; und
der Schätzverarbeitungsabschnitt (72) konfiguriert ist, um unmittelbar bevor der Drehwinkel den Grenzwinkel erreicht den durch den Motor (50) fließenden Strom derart zu schätzen, dass der geschätzte Strom (iqth) einer von dem Strombefehlswert (iq1*), der der Obergrenzenschutzverarbeitung unterworfen ist, und dem begrenzten Stromwert ist, wobei die Größe des einen des Strombefehlswerts (iq1*) und des begrenzten Stromwerts kleiner als die des anderen ist.

4. Lenksteuerungsvorrichtung (70) nach Anspruch 2 oder 3, wobei:

der Endbestimmungs-Verarbeitungsabschnitt (72) einen vorläufigen BestimmungsVerarbeitungsabschnitt (72), der konfiguriert ist, um eine vorläufige Bestimmung vorzunehmen, dass der Drehwinkel den Grenzwinkel erreicht hat, und einen Hauptbestimmungs-Verarbeitungsabschnitt (72) umfasst, der konfiguriert ist, um eine Hauptbestimmung auszuführen, dass der Drehwinkel den Grenzwinkel erreicht hat;
eine Bedingung, basierend auf der der Hauptbestimmungs-Verarbeitungsabschnitt (72) bestimmt, dass der Drehwinkel den Grenzwinkel erreicht hat, eine strengere Bedingung als eine Bedingung ist, basierend auf der der vorläufige Bestimmungsverarbeitungsabschnitt bestimmt, dass der Drehwinkel den Grenzwinkel erreicht hat;
der Schätzverarbeitungsabschnitt (72) konfiguriert ist, um unmittelbar bevor der Drehwinkel den Grenzwinkel erreicht den durch den Motor (50) fließenden Strom derart zu schätzen, dass der geschätzte Strom (iqth) einer von dem begrenzten Stromwert und dem Strombefehlswert (iq1*) zu einem Zeitpunkt ist, wenn der vorläufige Bestimmungsverarbeitungsabschnitt bestimmt, dass der Drehwinkel den Grenzwinkel erreicht hat, wobei die Größe des einen des begrenzten Stromwerts und des Strombefehlswerts (iq1*) kleiner als die des anderen ist, und der begrenzte Stromwert ein Wert ist, der durch Ausführen einer Korrektur erhalten wird, um die Größe des erfassten Werts des Stroms (iq), der durch den Motor (50) fließt, zu dem Zeitpunkt zu verringern, wenn der vorläufige Bestimmungsverarbeitungsabschnitt bestimmt, dass der Drehwinkel den Grenzwinkel erreicht hat, basierend auf dem Grad der Verringerung der Größe der Drehzahl (ω) des Motors (50); und
der Endzeitbegrenzungs-Verarbeitungsabschnitt (72) konfiguriert ist, um die Größe des Strombefehlswerts (iq*) für den Motor (50) auf die Größe des Stroms (iqth), der durch den Schätzverarbeitungsabschnitt (72) geschätzt wird, oder kleiner zu begrenzen, wenn der Hauptbestimmungs-Verarbeitungsabschnitt (72) bestimmt, dass der Drehwinkel den Grenzwinkel erreicht hat.

**5.** Lenksteuerungsvorrichtung (70) nach einem der Ansprüche 2 bis 4, wobei
der Rückkopplungs-Verarbeitungsabschnitt (M22) konfiguriert ist, um eine Spannung (vq*), die an den Motor (50) angelegt wird, basierend auf einem Ausgangswert eines integralen Elements zu steuern, das unter Verwendung einer Differenz zwischen dem durch den Motor (50) fließenden Strom (iq) und dem Strombefehlswert (iq*) als ein Eingang erhalten wird; und
der Endzeitbegrenzungs-Verarbeitungsabschnitt (72) konfiguriert ist, um den Strombefehlswert (iq*) auf einen Wert einzustellen (S62), der durch Ausführen einer Korrektur erhalten wird, um die Größe des durch den Schätzverarbeitungsabschnitt (72) geschätzten Stroms (iqth) zu verringern, basierend auf dem Grad der Verringerung der Größe der Drehzahl (ω) des Motors (50).

**6.** Lenksteuerungsvorrichtung (70) nach einem der Ansprüche 1 bis 5, wobei
der Rückkopplungs-Verarbeitungsabschnitt (M22) konfiguriert ist, um eine Spannung (vq*), die an den Motor (50) angelegt wird, basierend auf einem Ausgangswert eines integralen Elements zu steuern, das unter Verwendung einer Differenz zwischen dem durch den Motor (50) fließenden Strom (iq) und dem Strombefehlswert (iq*) als ein Eingang erhalten wird; und
wenn der Endzeitbegrenzungs-Verarbeitungsabschnitt (72) eine Verarbeitung zum Begrenzen der Größe des Strombefehlswerts (iq*) für den Motor (50) auf die Größe des begrenzten Stromwerts oder kleiner ausführt, der Rückkopplungs-Verarbeitungsabschnitt (M22) eine Verstärkung (Ki) des integralen Elements größer als die (Ki0) macht, wenn der Endzeitbegrenzungs-Verarbeitungsabschnitt (72) die Verarbeitung nicht ausführt.

**Revendications**

**1.** Dispositif de commande de direction (70) configuré pour commander un système de direction (10) comportant un actionneur de braquage (PSA) qui braque des roues directrices (34) d'un véhicule, le système de direction (10) assistant le braquage des roues directrices (34) en fonction d'une direction d'un volant (12), l'actionneur de braquage (PSA) comportant un moteur (50), le dispositif de commande de direction (70), comprenant :

une partie de traitement rétroactif (M22) configurée pour commander par rétroaction un courant (iq) circulant à travers le moteur (50) à une valeur d'instruction de courant (iq*) ;
une partie de traitement de détermination de fin (72) configurée pour déterminer si un angle de braquage de roues directrices (34) a atteint un angle limite déterminé par une structure du système de direction (10) ; et
une partie de traitement de limite de temps de fin (72) configurée pour limiter (S62) une grandeur de la valeur d'instruction de courant (iq*) pour le moteur (50) à une grandeur d'une valeur de courant limitée ou à moins, lorsque la partie de traitement de détermination de fin (72) détermine que l'angle de braquage a atteint l'angle limite, **caractérisé en ce que**
la valeur de courant limitée est une valeur obtenue en effectuant une correction pour diminuer une grandeur d'une valeur détectée du courant (iq) circulant à travers le moteur (50) à un moment où la partie de traitement de détermination de fin (72) détermine que l'angle de braquage a atteint l'angle limite, sur la base d'un degré d'une diminution dans une grandeur d'une vitesse de rotation (ω) du moteur (50).

**2.** Dispositif de commande de direction (70) selon la revendication 1, dans lequel :

le dispositif de commande de direction (70) comporte en outre une partie de traitement de réglage de valeur d'instruction (M10, M12, M14) configurée pour régler la valeur d'instruction de courant (iq*) sur la base d'une valeur détectée d'un couple de direction (Trq) ;
la partie de traitement de réglage de valeur d'instruction est configurée pour régler la grandeur de la valeur d'instruction de courant (iq*) de sorte que la grandeur de la valeur d'instruction de courant (iq*) à un moment où une grandeur de la valeur détectée du couple de direction (Trq) est grande soit plus grande que la grandeur de la valeur d'instruction de courant (iq*) à un moment où la grandeur de la valeur détectée du couple de direction (Trq) est petite ;
le dispositif de commande de direction (70) comporte en outre une partie de traitement d'estimation (72) configurée pour estimer le courant circulant à travers le moteur (50) juste avant que l'angle de braquage n'atteigne l'angle limite de sorte que le courant estimé (iqème) soit l'une parmi la valeur d'instruction de courant (iq1*) réglée par la partie de traitement de réglage de valeur d'instruction (M10, M12, M14) et la valeur de courant limitée, lorsque la partie de traitement de détermination de fin (72) détermine que l'angle de braquage a atteint l'angle limite, la grandeur de l'une parmi la valeur d'instruction de courant (iq1*) et la valeur de courant limitée étant plus petite que celle de l'autre ; et

la partie de traitement de limite de temps de fin (72) est configurée pour régler (S62) la valeur d'instruction de courant (iq*) sur une valeur qui est inférieure ou égale à une grandeur du courant (iqème) estimé par la partie de traitement d'estimation (72).

3.  Dispositif de commande de direction (70) selon la revendication 2, dans lequel :

la partie de traitement de réglage de valeur d'instruction (M10, M12, M14) comporte une partie de traitement de garde de limite supérieure (M14) configurée pour exécuter un traitement de garde de limite supérieure sur la grandeur de la valeur d'instruction de courant (iq*) ;
la partie de traitement de garde de limite supérieure (M14) est configurée pour régler une valeur de garde de limite supérieure (Ième) de la valeur d'instruction de courant (iq*) de sorte que la valeur de garde de limite supérieure (Ième) à un moment où la grandeur de la vitesse de rotation (ω) du moteur (50) est grande soit plus petite que la valeur de garde de limite supérieure (Ième) à un moment où la grandeur de la vitesse de rotation (ω) du moteur (50) est petite ; et
la partie de traitement d'estimation (72) est configurée pour estimer le courant circulant à travers le moteur (50) juste avant que l'angle de braquage n'atteigne l'angle limite de sorte que le courant estimé (iqème) soit l'une parmi la valeur d'instruction de courant (iq1*) qui est soumise au traitement de garde de limite supérieure et la valeur de courant limitée, la grandeur de l'une parmi la valeur d'instruction de courant (iq1*) et la valeur de courant limitée étant plus petite que celle de l'autre.

4.  Dispositif de commande de direction (70) selon la revendication 2 ou 3, dans lequel :

la partie de traitement de détermination de fin (72) comporte une partie de traitement de détermination provisoire (72) configurée pour réaliser une détermination provisoire du fait que l'angle de braquage a atteint l'angle limite, et une partie de traitement de détermination principale (72) configurée pour réaliser une détermination principale du fait que l'angle de braquage a atteint l'angle limite ;
une condition sur la base de laquelle la partie de traitement de détermination principale (72) détermine que l'angle de braquage a atteint l'angle limite est une condition plus stricte qu'une condition sur la base de laquelle la partie de traitement de détermination provisoire détermine que l'angle de braquage a atteint l'angle limite ;
la partie de traitement d'estimation (72) est configurée pour estimer le courant circulant à travers le moteur (50) juste avant que l'angle de braquage n'atteigne l'angle limite de sorte que le courant estimé (iqème) soit l'une parmi la valeur de courant limitée et la valeur d'instruction de courant (iq1*) à un moment où la partie de traitement de détermination provisoire détermine que l'angle de braquage a atteint l'angle limite, la grandeur de l'une parmi la valeur de courant limitée et la valeur d'instruction de courant (iq1*) étant plus petite que celle de l'autre, et la valeur de courant limitée étant une valeur qui est obtenue en effectuant une correction pour diminuer la grandeur de la valeur détectée du courant (iq) circulant à travers le moteur (50) au moment où la partie de traitement de détermination provisoire détermine que l'angle de braquage a atteint l'angle limite, sur la base du degré de la diminution dans la grandeur de la vitesse de rotation (ω) du moteur (50) ; et
la partie de traitement de limite de temps de fin (72) est configurée pour limiter la grandeur de la valeur d'instruction de courant (iq*) pour le moteur (50) à la grandeur du courant (iqème) estimé par la partie de traitement d'estimation (72) ou à moins, lorsque la partie de traitement de détermination principale (72) détermine que l'angle de braquage a atteint l'angle limite.

5.  Dispositif de commande de direction (70) selon l'une quelconque des revendications 2 à 4, dans lequel :

la partie de traitement rétroactif (M22) est configurée pour commander une tension (vq*) qui est appliquée au moteur (50) sur la base d'une valeur de sortie d'un élément intégral obtenu en utilisant, comme entrée, une différence entre le courant (iq) circulant à travers le moteur (50) et la valeur d'instruction de courant (iq*) ; et
la partie de traitement de limite de temps de fin (72) est configurée pour régler (S62) la valeur d'instruction de courant (iq*) sur une valeur obtenue en effectuant une correction pour diminuer la grandeur du courant (iqème) estimé par la partie de traitement d'estimation (72), sur la base du degré de la diminution dans la grandeur de la vitesse de rotation (ω) du moteur (50).

6.  Dispositif de commande de direction (70) selon l'une quelconque des revendications 1 à 5, dans lequel :

la partie de traitement rétroactif (M22) est configurée pour commander une tension (vq*) qui est appliquée au moteur (50) sur la base d'une valeur de sortie d'un élément intégral obtenu en utilisant, comme entrée, une différence entre le courant (iq) circulant à travers le moteur (50) et la valeur d'instruction de courant (iq*) ; et

lorsque la partie de traitement de limite de temps de fin (72) exécute un traitement consistant à limiter la grandeur de la valeur d'instruction de courant (iq*) pour le moteur (50) à la grandeur de la valeur de courant limitée ou à moins, la partie de traitement rétroactif (M22) réalise (S94) un gain (Ki) de l'élément intégral plus grand que celui (Ki0) lorsque la partie de traitement de limite de temps de fin (72) n'exécute pas le traitement.

FIG. 1

FIG. 2

## FIG. 3

```
        ┌─────────────────────┐
        │ CURRENT ESTIMATION  │
        │ PROCESSING DURING END│
        │      ABUTMENT       │
        └─────────────────────┘
                  │
                  ▼
        ┌─────────────────────┐
        │ OBTAIN iq, iq1*, ω, dω (n) │──── S10
        └─────────────────────┘
                  │
                  ▼
```

S12

$d\omega\,(n-1) \geq d\omega th1$
AND
$d\omega\,(n) < d\omega th1$
AND
$\omega > \omega th1$
?

NO

YES

S20

$d\omega\,(n-1) \leq -d\omega th1$
AND
$d\omega\,(n) > -d\omega th1$
AND
$\omega < -\omega th1$
?

NO

YES

S14

$iq + Kie \cdot d\omega\,(n) < iq1*$ ?

NO

YES

S22

$iq + Kie \cdot d\omega\,(n) > iq1*$ ?

NO

YES

S16

$iqth \leftarrow iq + Kie \cdot d\omega\,(n)$

S24

$iqth \leftarrow iq + Kie \cdot d\omega\,(n)$

S18

$iqth \leftarrow iq1*$

S26

$iqth \leftarrow iq1*$

```
        ┌─────────┐
        │   END   │
        └─────────┘
```

# FIG. 4

t1 t2

LARGE

(a) LOW μ ROAD

iq

iq1*

LARGE

(b) HIGH μ ROAD

iq

iq1*

## FIG. 5

```
        ┌─────────────────────────┐
        │   END ABUTMENT MAIN     │
        │ DETERMINATION PROCESSING │
        └─────────────────────────┘
                    │
                    ▼         ╲ S30
            ╱─────────────────╲
           ╱  END ABUTMENT     ╲  NO
          ╱  DETERMINATION      ╲─────────────────────────────┐
           ╲  FLAG F = 0?      ╱                              │
            ╲─────────────────╱                               │
                    │ YES                                     │
                    ▼                                         │
         ╱───────────────────╲  S32                           │
        ╱    dω < dωth2        ╲                              │
       ╱       AND              ╲  NO                         │
      ╱       ω > ωth2           ╲────────┐                   │
       ╲       AND              ╱         │                   │
        ╲   Trq > Trqth        ╱          ▼                   │
         ╲     AND            ╱     ╱───────────────╲  S46     │
          ╲  iq > iqth1      ╱     ╱   dω > -dωth2   ╲         │
           ╲    ?           ╱     ╱       AND         ╲        │
            ╲──────────────╱     ╱      ω < -ωth2      ╲  NO   │
                 │ YES          ╱        AND            ╲──────┤
                 │             ╱      Trq < -Trqth      ╱      │
                 │              ╲        AND           ╱       │
                 │               ╲   iq < -iqth1      ╱        │
                 │                ╲      ?           ╱         │
                 │                 ╲───────────────╱          │
                 │                      │ YES                 │
                 ▼   S34                ▼   S48                ▼   S58
          ┌──────────────┐      ┌──────────────┐       ┌──────────────┐
          │  Cp ← Cp + 1 │      │   Cp ← 0     │       │   Cp ← 0     │
          └──────────────┘      └──────────────┘       │   Cn ← 0     │
                 │   S36                │   S50         └──────────────┘
          ┌──────────────┐      ┌──────────────┐              │
          │   Cn ← 0     │      │  Cn ← Cn + 1 │              │
          └──────────────┘      └──────────────┘              │
                 │   S38  NO            │   S52  NO            │
           ╱──────────╲─────┐    ╱──────────╲─────┐           │
          ╱  Cp ≥ Cth? ╲    │   ╱  Cn ≥ Cth? ╲    │           │
           ╲──────────╱     │    ╲──────────╱     │           │
                 │ YES      │          │ YES      │           │
                 ▼   S40    │          ▼   S54    │           │
          ┌──────────────┐  │   ┌──────────────┐  │           │
          │   Cp ← 0     │  │   │   Cn ← 0     │  │           │
          └──────────────┘  │   └──────────────┘  │           │
                 │   S42    │          │   S56    │           │
          ┌──────────────┐  │   ┌──────────────┐  │           │
          │   F ← 1      │  │   │   F ← 2      │  │           │
          └──────────────┘  │   └──────────────┘  │           │
                 │          │          │          │           │
                 ▼◄─────────┴──────────┴──────────┴───────────┘
          ┌──────────────┐
          │     END      │
          └──────────────┘
```

# FIG. 6

```
         ┌─────────────┐
         │    START    │
         └──────┬──────┘
                │
                ▼              S60
           ╱─────────╲
          ╱   F = 1   ╲        NO
         ╱     OR      ╲──────────────┐
         ╲   F = 2 ?   ╱              │
          ╲           ╱               │
           ╲─────────╱                │
                │                     │
              YES   S62               │       S64
                ▼                     ▼
      ┌───────────────────┐   ┌───────────────────┐
      │   iq* ← iqth       │   │   iq* ← iq1*       │
      └─────────┬─────────┘   └─────────┬─────────┘
                │                        │
                │◄───────────────────────┘
                ▼
         ┌─────────────┐
         │     END     │
         └─────────────┘
```

# FIG. 7

```
              ┌─────────────┐
              │    START    │
              └──────┬──────┘
                     │  S70
                     ▼
                ╱─────────╲      NO
               ╱  F = 1 ?  ╲────────────────────────────────────┐
               ╲           ╱                                     │
                ╲─────────╱                             ▼   S76
                     │                              ╱─────────╲      NO
                   YES                             ╱  F = 2 ?  ╲─────────┐
                     │                             ╲           ╱         │
                     ▼  S72                         ╲─────────╱          │
          ╱───────────────────────╲                     │               │
   NO    ╱  SPECIFIED TIME T ELAPSES ╲               YES   S78          │
 ◄──────╱   AFTER MAIN DETERMINATION  ╲                     ▼            │
        ╲       AND                   ╱      ╱───────────────────────╲   │
        ╲    iq1* ≤ iqth ?           ╱  NO  ╱  SPECIFIED TIME T ELAPSES ╲ │
         ╲                          ╱  ◄───╱   AFTER MAIN DETERMINATION  ╲│
          ╲───────────────────────╱       ╲       AND                   ╱
                     │                     ╲    iq1* ≥ iqth ?           ╱
                   YES                      ╲                          ╱
                     │◄─────────────────────╲───────────────────────╱
                     │                            │
                     ▼  S74                     YES
          ┌───────────────────┐
          │      F ← 0         │
          └─────────┬─────────┘
                    │
                    ▼
             ┌─────────────┐
             │     END     │
             └─────────────┘
```

## FIG. 8

START

S80

F = 1
OR
F = 2 ?

NO

YES

S82

$iqth \leftarrow iqth + Kic \cdot d\omega$

Kic

A

0    T    TIME

END

## FIG. 9

START

S90

F = 1
OR
F = 2 ?

NO

YES  S94

$Kp \leftarrow Kpe \, (> Kp0)$
$Ki \leftarrow Kie \, (> Ki0)$

S92

$Kp \leftarrow Kp0$
$Ki \leftarrow Ki0$

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009143312 A

- WO 2007093875 A2